(19) Europäisches Patentamt
European Patent Office
Office européen des brevets

(11) EP 3 895 788 A1

# (12) EUROPEAN PATENT APPLICATION
published in accordance with Art. 153(4) EPC

(43) Date of publication:
**20.10.2021 Bulletin 2021/42**

(21) Application number: **19896806.7**

(22) Date of filing: **11.12.2019**

(51) Int Cl.:
***B01D 63/10*** (2006.01) ***B01D 69/10*** (2006.01)
***B01D 69/12*** (2006.01) ***B01D 71/56*** (2006.01)
***C01B 3/00*** (2006.01) ***C01B 3/56*** (2006.01)
***B01D 53/22*** (2006.01) ***H01M 8/04*** (2016.01)
***H01M 8/04791*** (2016.01) ***H01M 8/0662*** (2016.01)
***H01M 8/10*** (2016.01) ***H01M 8/12*** (2016.01)

(86) International application number:
**PCT/JP2019/048577**

(87) International publication number:
**WO 2020/122152 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2018 JP 2018231444**

(71) Applicant: **Toray Industries, Inc.**
**Tokyo, 103-8666 (JP)**

(72) Inventors:
- **TOKUYAMA Takahiro**
  **Otsu-shi, Shiga 520-8558 (JP)**
- **IIZUKA Rina**
  **Otsu-shi, Shiga 520-8558 (JP)**
- **YAMADA Hiroyuki**
  **Otsu-shi, Shiga 520-8558 (JP)**
- **KIMURA Masahiro**
  **Otsu-shi, Shiga 520-8558 (JP)**

(74) Representative: **Hoefer & Partner Patentanwälte mbB**
**Pilgersheimer Straße 20**
**81543 München (DE)**

## (54) POWER GENERATION SYSTEM

(57) The present invention separates and recycles hydrogen, from negative-electrode exhaust gas, using a separation membrane containing any one of a polyamide, graphene, a metal organic framework (MOF), and a covalent organic framework (COF).

FIG. 1

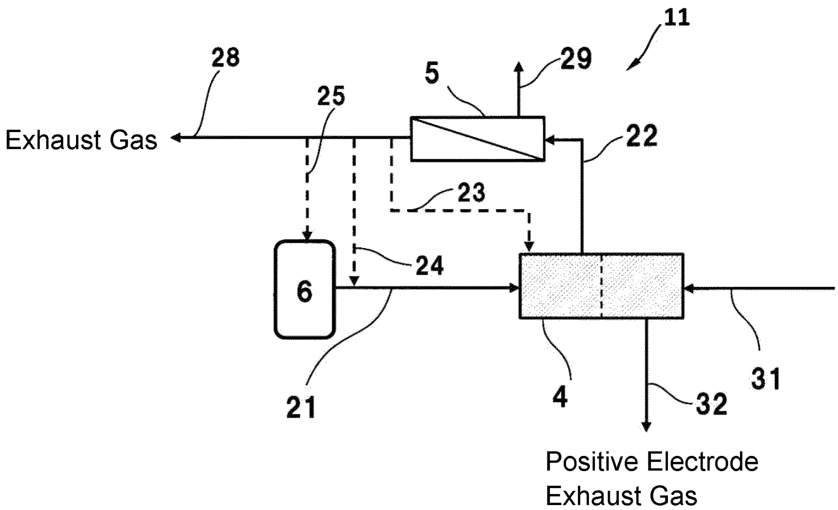


EP 3 895 788 A1

## Description

### TECHNICAL FIELD

The present invention relates to a high-efficiency power generation system using a gas-permselective separation membrane and a fuel cell.

### BACKGROUND ART

A fuel cell has a basic structure called a single cell, which includes an electrolyte membrane, and a negative electrode (fuel electrode) and a positive electrode (air electrode) provided to hold the electrolyte membrane therebetween. The fuel cell can generate electricity from hydrogen supplied to the negative electrode and oxygen supplied to the positive electrode.

Hydrogen for use in fuel cells may be contaminated with impurities such as hydrocarbon, carbon monoxide, carbon dioxide, sulfur contents (hydrogen sulfide and sulfur dioxide gas), ammonia, and water vapor. In addition, oxygen is typically supplied from the air. The air contains various substances other than oxygen. Some kinds of those impurities or some quantities thereof may lower the efficiency of power generation.

It has been also proposed to separate hydrogen from exhaust gas and circulate the hydrogen to a negative electrode again in order to effectively use the hydrogen contained in the gas discharged from the negative electrode side (Patent Literatures 1 to 3).

### CITATION LIST

### PATENT LITERATURE

Patent Literature 1: JP 2004-06948 A
Patent Literature 2: JP 2007-42607 A
Patent Literature 3: JP 2009-295377 A

### SUMMARY OF INVENTION

### TECHNICAL PROBLEM

The present invention provides a power generation system in which exhaust gas on the negative electrode side can be recycled efficiently.

### SOLUTION TO PROBLEM

The power generation system according to the present invention is a power generation system including:

a fuel cell that includes a negative electrode supplied with hydrogen-containing gas and a positive electrode supplied with oxygen-containing gas, and is configured to generate electric power by chemical reaction between the hydrogen and the oxygen;
a separator that includes a hydrogen-permselective separation membrane and is configured to obtain permeated gas and non-permeated gas from mixed gas; and
a circulating passage through which negative electrode-side exhaust gas of the fuel cell is sent to the separator, and through which the permeated gas is supplied to the negative electrode, in which:

the separation membrane includes a porous support layer and a separation functional layer provided on the porous support layer; and
the separation functional layer contains at least one kind of chemical compound selected from the group consisting of polyamide, graphene, MOF (Metal Organic Framework), and COF (Covalent Organic Framework).

### ADVANTAGEOUS EFFECTS OF INVENTION

According to the present invention, it is possible to efficiently recycle the exhaust gas from the negative electrode

side.

BRIEF DESCRIPTION OF DRAWINGS

FIG. 1 is a schematic view showing an embodiment of a power generation system according to the present invention.
FIG. 2 is a schematic view showing another embodiment of the power generation system according to the present invention.
FIG. 3 is a sectional view of a separation membrane.
FIG. 4 is a partial development perspective view showing a form of a separation membrane element.
FIG. 5 is a schematic view of an apparatus used for a power generation test.
FIG. 6 is a schematic view of an apparatus used for a power generation test.
FIG. 7 is a schematic view of an apparatus used for a power generation test.
FIG. 8 is a schematic view of an apparatus used for a power generation test.
FIG. 9 is a schematic view of an apparatus for measuring gas permeability of the separation membrane.

DESCRIPTION OF EMBODIMENTS

1. Power Generation System

Embodiments of a power generation system including a fuel cell having a negative electrode and a positive electrode, a circulating passage through which exhaust gas discharged from the negative electrode side of the fuel cell is circulated to the negative electrode again, and a separator disposed in the circulating passage and housing a separation membrane for separating hydrogen from other gases will be described below. Other common techniques may be combined with each of the embodiments.

(1-1) Overall Configuration

[First Embodiment]

FIG. 1 is a schematic view showing an embodiment of the power generation system according to the present invention.
A power generation system 11 shown in FIG. 1 includes a negative electrode gas supply pipe arrangement 21, a circulating pipe arrangement, a negative electrode exhaust gas pipe arrangement 28, a non-permeated gas pipe arrangement 29, a positive electrode gas supply pipe arrangement 31, a positive electrode exhaust gas pipe arrangement 32, a fuel cell 4, a separator 5, and a hydrogen storage tank 6.
The negative electrode gas supply pipe arrangement 21 is connected to the negative electrode-side entrance of the fuel cell 4 so as to supply negative electrode gas to the negative electrode of the fuel cell 4. The negative electrode gas is also called fuel gas or hydrogen-containing gas. The negative electrode gas may be pure hydrogen gas or may be mixed gas with other components. In FIG. 1, the negative electrode gas supply pipe arrangement 21 is connected to the hydrogen storage tank 6. However, the negative electrode gas supply pipe arrangement 21 may be connected not to the hydrogen storage tank 6 but to an infrastructure facility.
The circulating passage includes a mixed gas pipe arrangement 22, and at least one of return pipe arrangements 23 to 25. The mixed gas pipe arrangement 22 establishes connection between the negative electrode-side exit of the fuel cell 4 and the supply-side entrance of the separator 5. The return pipe arrangements 23 to 25 are connected to the permeation-side exit of the separator 5. Through the circulating passage, exhaust gas from the negative electrode-side exit of the fuel cell is sent to the separator 5, and permeated gas obtained by the separator 5 is sent to the negative electrode-side entrance of the fuel cell.
The return pipe arrangement 23 establishes connection between the permeation-side exit of the separator 5 and the negative electrode-side entrance of the fuel cell 4. On this occasion, the fuel cell 4 has two or more ports of the negative electrode-side entrance so that the return pipe arrangement 23 can be connected to another port of the negative electrode-side entrance than the port of the negative electrode-side entrance to which the negative electrode gas supply pipe arrangement 21 is connected.
The return pipe arrangement 24 is connected to the permeation-side exit of the separator 5 so as to join the negative electrode gas supply pipe arrangement 21. In the case where the hydrogen storage tank 6 is provided, the return pipe arrangement 24 is connected to the negative electrode gas supply pipe arrangement 21 at the downstream of the hydrogen storage tank 6.

The return pipe arrangement 25 establishes connection between the permeation-side exit of the separator 5 and the supply port of the hydrogen storage tank 6.

The negative electrode exhaust gas pipe arrangement 28 branches from the return pipe arrangement at the downstream of the separator 5 so that the gas which has permeated through the separator 5 is not returned to the fuel cell 4 but guided to the outside of the system.

In this manner, the return pipe arrangement through which "gas exhausted from the negative electrode of the fuel cell is circulated to the negative electrode again" may send the gas directly to the negative electrode or may send the gas to the negative electrode indirectly by sending the gas to a pipe arrangement or the tank at the upstream of the negative electrode.

The non-permeated gas pipe arrangement 29 is connected to the supply-side exit of the separator 5 so as to guide the gas which has not permeated through the separator 5 to the outside of the system.

The positive electrode gas supply pipe arrangement 31 is connected to the positive electrode-side entrance of the fuel cell 4. The positive electrode gas supply pipe arrangement 31 supplies positive electrode gas to the positive electrode side of the fuel cell 4. Any gas containing oxygen can be used as the positive electrode gas. Therefore, the positive electrode gas may be the air or may be mixed gas containing oxygen and other components at a specified ratio. The power generation system may be provided with a not-shown compressor. The positive electrode gas supply pipe arrangement 31 may be connected to the compressor. In addition, the power generation system may be provided with a not-shown gas tank. The positive electrode gas supply pipe arrangement 31 may be connected to the gas tank.

The positive electrode exhaust gas pipe arrangement 32 is connected to the positive electrode-side exit of the fuel cell 4 so as to guide positive electrode-side exhaust gas to the outside of the system.

A common fuel cell is used as the fuel cell 4. The fuel cell includes a negative electrode, a positive electrode, a negative electrode-side entrance through which negative electrode gas is supplied to the negative electrode, a negative electrode-side exit through which negative electrode-side exhaust gas is discharged, a positive electrode-side entrance through which positive electrode gas is supplied to the positive electrode, and a positive electrode-side exit through which positive electrode-side exhaust gas is discharged. The fuel cell will be described in detail later.

The separator 5 may only have a separation membrane which can obtain permeated gas having a reduced concentration of unnecessary components and non-permeated gas containing the unnecessary components from mixed gas of hydrogen and the unnecessary components due to a difference in permeability of the separation membrane between hydrogen and the unnecessary components. The purity of hydrogen in the circulating exhaust gas can be enhanced by the separator 5. The details of the separator 5 will be described later.

The hydrogen storage tank 6 can store high-pressure gas inside it. The hydrogen storage tank 6 is connected to the negative electrode gas supply pipe arrangement 21. The hydrogen storage tank 6 may have a supply port through which hydrogen mixed gas is supplied from the outside. The hydrogen storage tank 6 may be connected to a circulating pipe arrangement which will be described later, so that the hydrogen storage tank 6 can store gas to be recycled. In the case where the power generation system can continuously receive gas supplied from an infrastructure, the hydrogen storage tank 6 may be removed.

In addition to the aforementioned members, the power generation system may include constituent elements disposed properly, such as another gas pipe arrangement, a pressure control valve, a temperature and humidity controller, a pipe arrangement for discharging unnecessary water, a dewatering device, a gas diluter, a hydrogen concentration sensor, a vacuum pump, a compressor, a heat exchanger, a condenser, a heater, a chiller, a desulphurization device, a dust collecting filter, a humidifier, a unit for cooling a cell stack of fuel cells, and various controllers.

[Second Embodiment]

FIG. 2 is a schematic view showing another embodiment of the power generation system according to the present invention. A power generation system 12 in FIG. 2 includes a positive electrode exhaust gas return pipe arrangement 33 instead of the positive electrode exhaust gas pipe arrangement 32. The positive electrode exhaust gas return pipe arrangement 33 is connected to the positive electrode-side exit of the fuel cell 4 so as to join the mixed gas pipe arrangement 22. The other configuration is the same as described above about the power generation system 11.

The positive electrode exhaust gas pipe arrangement 33 is connected to a circulating pipe arrangement (mixed gas pipe arrangement 22) at a portion located in the downstream of the fuel cell 4 and the upstream of the separator 5 so that gas discharged from the positive electrode can join gas discharged from the negative electrode. Due to this configuration, the negative electrode-side exhaust gas is diluted by the positive electrode-side exhaust gas before the negative electrode-side exhaust gas is supplied to the separator.

(1-2) Fuel cell

The fuel cell 4 has a negative electrode to which hydrogen-containing gas is supplied, and a positive electrode

to which oxygen-containing gas is supplied. The fuel cell 4 generates electric power due to chemical reaction between the hydrogen and the oxygen. A common fuel cell such as a solid oxide fuel cell (SOFC), a molten carbonate fuel cell (MCFC), a phosphoric acid fuel cell (PAFC), or a polymer electrolyte fuel cell (PEFC) can be used as the fuel cell 4.

The fuel cell has a basic structure called a cell including an electrolyte membrane, a negative electrode (fuel electrode) and a positive electrode (air electrode) which are provided to hold the electrolyte membrane therebetween. Each of the negative electrode and the positive electrode has a carrier and a catalyst. The cell may further include separators disposed to hold the negative electrode and the positive electrode from outside, and gas diffusion layers disposed between the separator and the negative electrode and between the separator and the positive electrode respectively. Fine grooves are formed in the surface of each separator so that gas can be supplied to the corresponding electrode through the grooves.

In the case where the electrolyte membrane is a polymer membrane, it is preferable that the polymer membrane is kept wet to ensure high electric conductivity for hydrogen ions. Therefore, it is preferable that humidifiers are provided on the negative electrode gas supply pipe arrangement 21 and the positive electrode gas supply pipe arrangement 31 so that hydrogen and the air can be humidified in advance and then supplied to the fuel cell.

The fuel cell typically includes not a single cell but a cell stack in which a plurality of cells are connected in series. A high voltage of several tens or more volts can be obtained by the cell stack.

A power generation system for use in home or for use on vehicle has limitations on its size and mass. Therefore, a fuel cell is also required to be miniaturized. The cell stack preferably has a maximum output density per volume of 1 kW/L or more, and has a cell stack volume of 70 L or less. More preferably, the cell stack has a maximum output density per volume of 3 kW/L or more, and has a cell stack volume of 40 L or less. The mass of the cell stack is preferably 100 kg or less, and more preferably 60 kg or less.

(1-3) Separator

The separator 5 includes a separation membrane, a supply-side flow channel through which mixed gas is supplied to one surface of the separation membrane, and a permeation-side flow channel where gas permeated through the separation membrane flows. The separator 5 obtains permeated gas and non-permeated gas from the supplied mixed gas by means of the separation membrane including a separation membrane which is selectively permeable to an intended component. The mixed gas is a mixture of the intended component and unnecessary components. The concentration of the unnecessary components in the permeated gas is lower than the concentration of the unnecessary components in the mixed gas. In other words, the separation membrane has higher permeability to the intended component than permeability to the unnecessary components. In the present embodiment, the intended component is hydrogen, and the unnecessary components include nitrogen, carbon monoxide, carbon dioxide, hydrogen sulfide, sulfur dioxide gas, hydrocarbons, etc.

Specifically, a spiral-type element which will be described later, a cell-type element which includes a disc-shaped separation membrane and a housing for receiving the separation membrane, or the like can be used as the separator. In addition, the separator 5 may include a plurality of elements and a housing for receiving the elements.

In the case where the separator 5 includes a plurality of elements, the elements may be disposed in series with one another or may be disposed in parallel to one another. In addition, a plurality of different kinds of elements may be combined. In the case where the elements are connected in series, the elements may be disposed so that a downstream element can be supplied with either non-permeated gas or permeated gas from an upstream element. Further, the elements may be disposed so that non-permeated gas or permeated gas from a downstream element can be supplied to an upstream element.

In addition, a plurality of separators 5 may be connected in series or in parallel. The separators 5 may have one and the same configuration or may have different configurations.

In order to reduce the total size and weight of the system, it is preferable to also minimize the volume of the separator 5.

For example, in the case where the fuel cell has a cell stack having a maximum output density per volume of 1 kW/L or more and a volume of 70 L or less, it is preferable that the volume of separation membrane elements per cell stack is 50 L or less. The number of separation membrane elements are not particularly limited. In the case where a plurality of separation membrane elements are provided in one cell stack, the volume of separation membrane elements is the sum total of volumes of the separation membrane elements. For example, one spiral-type element (whose volume is around 45 L) having an outer diameter of 8 inches and a length of 1 meter may be used, or a plurality of spiral elements each having a smaller volume may be used.

Further, in the case where the fuel cell has a cell stack having a maximum output density per volume of 3 kW/L or more and a volume of 40 L or less, it is preferable that the volume of separation membrane elements per cell stack is 25 L or less. For example, one spiral-type element (whose volume is around 23 L) having an outer diameter of 4 inches and a length of 0.5 meter may be used, or a plurality of spiral elements each having a smaller volume may be used.

In a system such as an on-vehicle system, which is requested to be further miniaturized, it is preferable to use smaller separation membrane elements. For example, in the case where the fuel cell has a cell stack having a maximum output density per volume of 3 kW/L or more and a volume of 40 L or less, it is preferable that the volume of separation membrane elements per cell stack is 5 L or less. For example, one columnar element (whose volume is around 1.5 L) having an outer diameter of 2 inches and a length of 0.5 meter may be used, or a plurality of spiral elements each having a smaller volume may be used.

Further, in order to reduce the size of the power generation system, it is preferable that the sum of an average volume per cell stack and an average volume per separation membrane element is 40 L or less, and the sum of an average weight per cell stack and an average weight per separation membrane element is 60 kg or less.

As will be described later, more efficient power generation can be achieved by use of a high-performance separation membrane. Further, by adjusting the thickness of a flow channel material, the area of the membrane can be increased without increasing the size of each element, or the size of the element can be reduced without reducing the area of the membrane.

As members relating to the separator 5, the power generation system 11 or 12 may further include a not-shown unit such as a valve provided on a pipe arrangement such as the mixed gas pipe arrangement 22, the non-permeated gas pipe arrangement 29 or the return pipe arrangement 23 to 25 so as to control the pressure or flow rate of gas, a tank for storing gas, etc. For example, the power generation system 11 or 12 may have a sweep gas supply portion for supplying sweep gas to the permeation-side flow channel of the separator 5. Hydrogen gas, or nitrogen gas or oxygen gas generated within the system may be used as the sweep gas. Alternatively, a gas tank storing sweep gas such as argon may be disposed in the system so that the sweep gas can be supplied through a pipe arrangement.

In the case where the gas to be supplied from the fuel cell 4 through the mixed gas pipe arrangement 22 is rich in sulfur contents, it is preferable to provide a desulphurization device at the upstream of the separator 5. In addition, hydrogen which has not been separated remains in unnecessary gas which has not permeated through the separation membrane in the separator 5. Therefore, a diluter for diluting the hydrogen before the unnecessary gas is discharged to the atmosphere may be provided. However, in the case where the positive electrode exhaust gas return pipe arrangement 33 is provided as shown in the embodiment of FIG. 2, the concentration of hydrogen can be reduced in advance. In this case, the diluter can be removed. A dewatering device for discharging unnecessary moisture may be provided at the upstream or downstream of the separator 5.

(1-4) Operation of System

Operation of the power generation system 11 in FIG. 1 will be described.

In the power generation system 11, negative electrode gas stored in the hydrogen storage tank 6 passes through the negative electrode gas supply pipe arrangement 21 so as to be supplied to the negative electrode of the fuel cell 4 through the negative electrode-side entrance thereof. The air passing through the positive electrode gas supply pipe arrangement 31 is supplied to the positive electrode of the fuel cell 4 through the positive electrode-side entrance thereof. Electrons and hydrogen ions are generated from hydrogen by the effect of a catalyst in the negative electrode. The hydrogen ions migrate to the positive electrode through an electrolyte, and the electrons migrate to the positive electrode through a conductor. Oxygen in the air supplied to the positive electrode, the hydrogen ions and the electrons react to one another by the effect of a catalyst in the positive electrode so as to generate water.

Gas including the water generated thus and the air is discharged from the positive electrode-side exit of the fuel cell 4. The exhaust gas is sent to the outside of the system or a not-shown apparatus through the positive electrode exhaust gas pipe arrangement 32.

Gas containing unreacted hydrogen is discharged from the negative electrode-side exit of the fuel cell 4. In addition to the unreacted hydrogen, the exhaust gas may contain nitrogen, carbon monoxide, carbon dioxide, hydrogen sulfide, sulfur dioxide gas, and hydrocarbons. The exhaust gas is sent to the supply-side flow channel of the separator 5 through the mixed gas pipe arrangement 22. The hydrogen in the exhaust gas passing through the supply-side flow channel of the separator 5 passes through the separation membrane and flows into the permeation-side flow channel of the separator 5.

In the case where the return pipe arrangement 23 is provided, the gas (permeated gas) which has passed through the permeation-side flow channel passes through the return pipe arrangement 23 so as to be supplied to the fuel cell 4 through the second port of the negative electrode-side entrance thereof. In the case where the return pipe arrangement 24 is provided, the permeated gas passes through the return pipe arrangement 24 and joins the negative electrode gas passing through the negative electrode gas supply pipe arrangement 21 so as to be supplied to the fuel cell 4 through the negative electrode-side entrance thereof. In the case where the return pipe arrangement 25 is provided, the permeated gas passes through the return pipe arrangement 25 and is supplied to the hydrogen storage tank 6 so as to be mixed with hydrogen gas, and then the gas is supplied to the fuel cell 4 through the negative electrode gas supply pipe arrangement 21. In this manner, the negative electrode-side exhaust gas is recycled.

In addition, when the permeated gas has some components (concentration of hydrogen or concentration of another component) or some gas quantity, the permeated gas passes through the negative electrode exhaust gas pipe arrangement 28 branching from the return pipe arrangement so as to be discharged without returning to the fuel cell 4.

The gas discharged from the supply-side flow channel of the separator 5 is sent to the outside of the system or a not-shown apparatus through the non-permeated gas pipe arrangement 29.

In the power generation system 12 in FIG. 2, the positive electrode exhaust gas return pipe arrangement 33 is connected to the mixed gas pipe arrangement 22 so that positive electrode exhaust gas which has passed through the positive electrode exhaust gas return pipe arrangement 33 can join the gas discharged from the negative electrode-side exit of the fuel cell 4. The mixture of the negative electrode exhaust gas and the positive electrode exhaust gas is separated into permeated gas containing hydrogen and gas containing the other components by the separator 5 in the same manner as in the processing in the power generation system 11.

The pressure with which the gas is supplied to the separator 5 is not particularly limited, but the pressure is preferably equal to or more than the atmospheric pressure and 10 MPa or less. In the case where the pressure is equal to or more than the atmospheric pressure, the permeability rate of the gas increases. In the case where the pressure is 10 MPa or less, members in the separator 5 can be prevented from being deformed.

The ratio between the supply-side pressure and the permeation-side pressure in the separator 5 is not particularly limited, but the ratio of the supply-side pressure to the permeation-side pressure is preferably 2 to 20. In the case where the ratio is set at 2 or higher, the permeability rate of the gas can be increased. In the case where the ratio is set at 20 or lower, the power cost for increasing the supply-side pressure can be reduced.

In order to make the supply-side pressure higher than the permeation-side pressure in the separator 5, the gas to be sent to the supply-side flow channel of the separator 5 may be boosted by a compressor or the permeation-side pressure may be reduced by a pump. Both of those two methods may be performed concurrently. Alternatively, valves may be provided before and after the separator 5 so that the supply rate of the gas can be adjusted by changing the openings of the valves. By adjusting the supply rate of the gas, the pressure of the gas can be also controlled.

The temperature of the gas to be supplied to the separator 5 is not particularly limited, but the temperature is preferably 0°C to 200°C. As the temperature is higher, the permeability of the gas is improved. In addition, in the case where the temperature is set within a suitable range for the fuel cell, the power generation efficiency can be enhanced. For example, the temperature of the gas is particularly preferably 70°C to 120°C.

In addition, in the power generation system 12 of FIG. 2, the positive electrode exhaust gas return pipe arrangement 33 is provided so that the negative electrode-side exhaust gas can be diluted with the positive electrode-side exhaust gas before it is supplied to the separator. The other gases flow in the same manner as described above about the power generation system 11.

2. Spiral-type Element

A spiral-type element will be described as an example of the separation membrane element. FIG. 3 is a partially exploded perspective view showing a spiral-type element 50. As shown in FIG. 3, the spiral-type element 50 includes a center tube 51, separation membranes 52, a supply-side flow channel material 53, a permeation-side flow channel material 54, a first end plate 55 and a second end plate 56.

The center tube 51 is a hollow cylindrical member having a through hole formed in a side surface thereof. The center tube 51 is preferably made of metal such as SUS (Stainless Used Steel), aluminum, copper, brass, titanium or the like from the viewpoint of pressure resistance or heat resistance. The material, shape, size, etc. of the center tube 51 may be changed.

The separation membranes 52 are laid on the supply-side flow channel material 53 and the permeation-side flow channel material 54, and spirally wound around the center tube 51. One spiral-type element may have a plurality of separation membranes 52. Due to the members wound thus, the spiral-type element 50 has an approximately columnar outer shape having a major axis in the longitudinal direction of the center tube 51.

In the case where each separation membrane 52 has a configuration in which a substrate 75, a porous support layer 74 and a separation functional layer 73 are laminated in this order as shown in FIG. 4, the separation membranes are laid on each other so that their separation functional layer side surfaces face each other and their substrate side surfaces face each other. Incidentally, in a two-layer structure where the substrate is absent, replace the "substrate side surfaces" by the "porous support layer side surfaces".

The supply-side flow channel material 53 is inserted between the separation functional layer side surfaces of the separation membranes 52, and the permeation-side flow channel material 54 is inserted between the substrate side surfaces. Therefore, the separation functional layer side surfaces are referred to as "supply-side surfaces", and the substrate side surfaces are referred to as "permeation-side surfaces".

The supply-side flow channel material 53 and the permeation-side flow channel material 54 are spacers for securing flow channels between the separation membranes. The permeation-side flow channel material and the supply-side flow channel material may be made of one and the same material or may be made of different materials. The permeation-side flow channel material and the supply-side flow channel material will be referred to as a "flow channel material" collectively.

Examples of the flow channel material include a net, nonwoven fabric, knitted fabric such as tricot, a porous sheet such as a film, etc. Protrusions formed out of resin or the like may be provided on one side or both sides of a sheet. In addition, protrusions may be attached and fixed directly to the permeation-side surface of the separation membrane so as to serve as a flow channel material. Further, the flow channel material may have a curved or linear wall which can control the flow of gas.

The material of the flow channel material is not particularly limited. Examples of materials that can be selected as the flow channel material include metals such as SUS, aluminum, copper, brass, titanium, etc.; and polymers such as urethane resin, epoxy resin, polyethersulfone, polyacrylonitrile, polyvinyl chloride, polyvinylidene chloride, polyvinyl alcohol, ethylene-vinylalcohol copolymer, polyphenylene sulfide, polystyrene, styrene-acrylonitrile copolymer, styrene-butadiene-acrylonitrile copolymer, polyacetal, polymethyl methacrylate, methacrylic-styrene copolymer, cellulose acetate, polycarbonate, polyethylene terephthalate, polybutylene terephthalate, fluororesin (such as polytrifluorochloroethylene, polyvinylidene fluoride, polytetrafluoroethylene, tetrafluoroethylene-hexafluoropropylene copolymer, tetrafluoroethylene-perfluoroalkoxyethylene copolymer, tetrafluoroethylene-ethylene copolymer, etc.), etc. The flow channel material may contain one kind of those materials, or may contain a mixture of two or more kinds of them.

When pressure is applied to the separation membrane due to loading the element on a pressure vessel, operation for a long time, or the like, the separation membrane may be damaged. In the case where at least one or preferably both of the supply-side flow channel material and the permeation-side flow channel material have an average hole diameter of 1 mm or less, stress on the separation membrane can be dispersed to reduce the damage thereof. The average hole diameter is more preferably 0.4 mm or less, and particularly preferably 0.1 mm or less. The average hole diameter is an average value of circle equivalent diameters expressed by "4 $\times$ area of hole in surface direction of flow channel material / circumference of the hole". The areas and circumferences of 30 holes in one surface of the flow channel material are measured to calculate circle equivalent diameters. An average value R1 of the 30 circle equivalent diameters obtained thus is calculated. An average value R2 of circle equivalent diameters in the other surface of the flow channel material is calculated in the same manner. An average value of the values R1 and R2 is calculated.

In addition, at least one or preferably both of the supply-side flow channel material and the permeation-side flow channel material have a thickness of preferably 150 $\mu$m or less, more preferably 80 $\mu$m or less, and particularly preferably 50 $\mu$m or less. In the case where the flow channel material is thin as above, rigidity to bending is reduced so that the flow channel material is less likely to be cracked. In addition, when the flow channel material is thin, the area of the separation membrane which can be received can be increased while keeping the volume of the separation membrane element. That is, the power generation system can be suitably reduced in size and weight while keeping its performance, which is suitable for home use or on-vehicle use.

The lower limit of the thickness of the flow channel material is set depending on use conditions of the spiral-type element or the like. The lower limit is not limited to a specific value. For example, the thickness of the flow channel material is preferably 5 $\mu$m or more, or 10 $\mu$m or more.

The thickness of the flow channel material is determined as an arithmetic mean value calculated from 20 thicknesses measured at an interval of 20 $\mu$m in the surface direction (a direction perpendicular to the thickness direction) of the flow channel material.

The supply-side flow channel is opened at the opposite ends in the longitudinal direction of the center tube 51. That is, a supply-side entrance is provided at one end of the spiral-type element 50, and a supply-side exit is provided at the other end. On the other hand, the supply-side flow channel is sealed off at an end portion on the inner side in the winding direction, that is, at an end portion on the center tube side. The sealing is formed by folding the separation membranes, bonding between the separation membranes using a hot melt or a chemical bonding agent, or welding between the separation membranes using a laser or the like.

The permeation-side flow channel is sealed off at the opposite ends in the longitudinal direction of the center tube 51. A similar sealing method to that in the supply-side flow channel is used. On the other hand, the permeation-side flow channel is opened at an end portion on the inner side in the winding direction, that is, at an end portion on the center tube side.

The first end plate 55 and the second end plate 56 are disc-shaped members, which are attached to a first end and a second end in the major axis direction of a roll of the separation membranes respectively. The first end is an upstream end portion in a direction in which the gas flows, and the second end is a downstream end portion in the same direction. The first end plate 55 has a hole through which the gas to be supplied to the supply-side flow channel passes. In such a case that the spiral-type element 50 is connected in series with another spiral-type element, a hole is provided in the first end plate 55 so that gas can flow into the center tube 51 through the hole. The second end plate 56 has a hole through which gas to be discharged from the supply-side flow channel passes, and a hole through which permeated gas to be discharged from the center tube 51 passes. As examples of shapes of such end plates, FIG. 3 shows end

plates 55 and 56 like spoke wheels.

With reference to FIG. 3, description will be made about gas separation in the spiral-type element 50. Gas G1 to be supplied through the mixed gas pipe arrangement 22 enters the supply-side flow channel from the first end of the spiral-type element 50. Gas G2 which has permeated through the separation membranes 52 flows into the center tube 51 through the permeation-side flow channel so as to be collected therein. The permeated gas G2 is discharged from the second end of the spiral-type element 50, and finally discharged to the return pipe arrangements 23 to 25 shown in FIG. 1 and FIG. 2. In addition, sweep gas may be made to flow through the permeation-side flow channel as described above.

Non-permeated gas G3 which has not permeated through the separation membranes 52 flows through the supply-side flow channel and is discharged to the non-permeated gas pipe arrangement 29 from the second end of the spiral-type element 50.

3. Separation Membrane

The separation membrane used in the aforementioned separator 5 includes a porous support layer and a separation functional layer on the porous support layer. As an embodiment, description will be made below about a separation membrane which includes a substrate 75, a porous support layer 74 on the substrate, and a separation functional layer 73 on the porous support layer, as shown in FIG. 4. In addition, the separation membrane which will be described below is a sheet-like membrane, that is, a flat membrane.

(3-1) Substrate

The substrate does not have substantial gas separation performance, but gives strength to the separation membrane.

Examples of the substrate include polyester-based polymer, polyamide-based polymer, polyolefin-based polymer, polyphenylene sulfide, mixtures or copolymers of those polymers, etc. Among them, fabric of polyester-based polymer which has high mechanical and thermal stability is particularly preferred. Examples of forms that can be preferably used as the fabric include filament nonwoven fabric, short fiber nonwoven fabric, and further woven or knitted fabric. Here, the filament nonwoven fabric designates nonwoven fabric having an average fiber length of 300 mm or more and an average fiber diameter of 3 to 30 μm.

The substrate preferably has a permeability rate of 0.5 $cc/cm^2/sec$ or more and 5.0 $cc/cm^2/sec$ or less. The adhesion between the porous support layer and the substrate can be improved to enhance the physical stability of the separation membrane.

The thickness of the substrate is preferably within a range of 10 to 200 μm, and more preferably within a range of 30 to 120 μm.

The "thickness" of the separation membrane and its constituent elements is expressed by an arithmetic mean value of thicknesses at 20 points. That is, the thickness is obtained as an arithmetic mean value calculated from 20 thickness values measured at an interval of 20 μm in the surface direction (a direction perpendicular to the thickness direction) of the member.

(3-2) Porous Support Layer

The porous support layer does not have substantial gas separation performance, but gives strength to the separation membrane.

The size and distribution of pores in the porous support layer are not particularly limited. The pore size in the porous support layer may be uniform over one surface and the other surface of the porous support layer, or may increase gradually from the surface where the separation functional layer is formed toward the other surface. At least the pore size (diameter of each pore) in the surface on the separation functional layer side is preferably 0.1 nm or more and 100 nm or less.

The porous support layer contains, for example, at least one kind of polymer selected from the group consisting of homopolymers and copolymers such as polysulfone, polyethersulfone, polyamide, polyester, cellulose-based polymer, vinyl polymer, polyphenylene sulfide, polyphenylene sulfide sulfone, polyphenylene sulfone, polyphenylene oxide, etc. Here, examples of the cellulose-based polymer include cellulose acetate, cellulose nitrate, etc. Examples of the vinyl polymer include polyethylene, polypropylene, polyvinyl chloride, polyacrylonitrile, etc.

Preferably the porous support layer contains homopolymer or copolymer such as polysulfone, polyamide, polyester, cellulose acetate, cellulose nitrate, polyvinyl chloride, polyacrylonitrile, polyphenylene sulfide, polyphenylene sulfide sulfone, or the like. More preferably, the porous support layer contains homopolymer or copolymer such as cellulose acetate, polysulfone, polyethersulfone, polyamide, polyphenylene sulfide sulfone, or polyphenylene sulfone.

Among them, polysulfone, polyethersulfone and polyamide are particularly preferred because they are high in chemical, mechanical and thermal stability and easy to be molded.

Particularly, a major component of the porous support layer is preferably aromatic polyamide containing an aromatic ring substituted with a chloro group. In the separation membrane including the porous support layer having such a composition, gas permeability and selectivity are less likely to be lowered even under high temperature. The reason is estimated as follows. The aromatic polyamide has a hydrogen bonding site. Therefore, the aromatic polyamide has a strong intermolecular interaction. That is, molecular motion in the aromatic polyamide is restricted even under high temperature. In addition, the chloro group further forms hydrogen bonds due to its high electron withdrawing effect. Thus, the chloro group enhances the intermolecular interaction. As a result, the porous support layer is less likely to be melted, and can keep its shape even under high temperature.

The porous support layer preferably contains aromatic polyamide consisting of at least one of repeating units expressed by the following chemical formulae (1) and (2).

[Chem. 1]

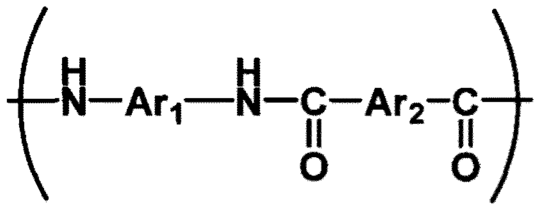

(1)

[Chem. 2]

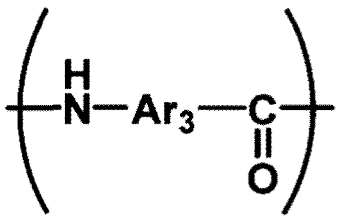

(2)

(Here, each of $Ar_1$, $Ar_2$ and $Ar_3$ is at least one group selected from the group consisting of groups expressed by the following formulae (3-1) to (3-5) and formula (4). In addition, each of X, Y and Z is at least one group selected from the group consisting of -O-, $-CH_2-$, -CO-, $-CO_2-$, -S-, $-SO_2-$, and $-C(CH_3)_2-$.)

[Chem. 3]

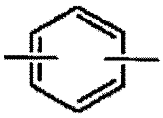

(3 − 1)

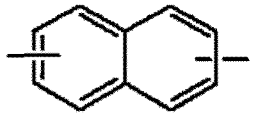

(3 − 2)

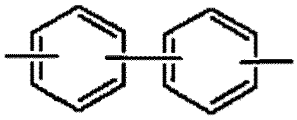

(3 − 3)

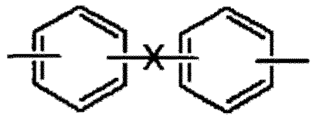

(3 − 4)

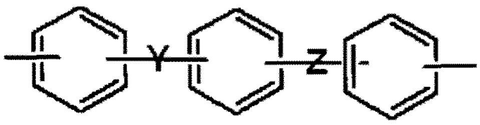

(3 − 5)

[Chem. 4]

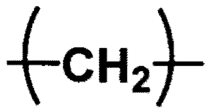

(4)

In the aromatic polyamide, the ratio (mole fraction) of the number of moles of groups of the formulae (3-1) to (3-5) to the total number of moles of $Ar_1$, $Ar_2$ and $Ar_3$ is preferably 60 mol% or higher, more preferably 80 mol% or higher, and even more preferably 98 mol% or higher. Use of the porous support layer having such a chemical structure improves separation selectivity between hydrogen and nitrogen.

In the case where $Ar_1$, $Ar_2$ and $Ar_3$ have structures expressed by the formulae (3-1) to (3-5), the aromatic ring has two substituents (that is, one or both of functional groups of -NH and -CO-) relating to amide bonding, as shown in the formulae (1) and (2). The positions of the two substituents in the aromatic ring can be para-positions or meta-positions. In the porous support layer, the aromatic polyamide molecule preferably contains a para-substitute in which those substituents are disposed in para-positions. Further, the number of aromatic rings as para-substitutes is preferably 50% or higher, more preferably 80% or higher, and even more preferably 90% or higher, to the total number of aromatic rings contained in the aromatic polyamide molecule. The "number" may be paraphrased as "number of moles". A meta-substitute has a bent structure, and a para-substitute has a linear structure. It is considered that this difference in structure gives influence to the performance of the membrane. The porous support layer may be formed out of only para-aramid.

The denominator of the ratio of para-substitutes is the total number of moles of aromatic rings contained in the aromatic polyamide. For example, the numbers of aromatic rings in the structures of the formulae (3-3), (3-4) and (3-5) are 2, 2 and 3 respectively. In addition, naphthalene (formula (3-2)) has one aromatic ring.

As for the numerator in the ratio of para-substitutes, the number of para-substitutes is, for example, 1 in the structure of a formula (3-4-mp). In addition, the substitute position of naphthalene (formula (3-2)) is usually not called para or meta. However, in the present description, ana-substitutes and amphi-substitutes are regarded as para-substitutes, and the other structures are regarded as meta-substitutes.

Table 1: Structure with only para-position as substitute

| | Structure | Basic structure | Number of aromatic rings | Number of para substitutes |
|---|---|---|---|---|
| 3-1-p | 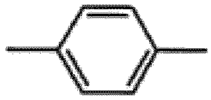 | 3-1 | 1 | 1 |
| 3-2-p-1 | 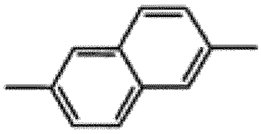 (Counted as para-substitute) | 3-2 | 1 | 1 |
| 3-2-p-2 | 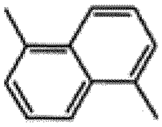 (Counted as para-substitute) | 3-2 | 1 | 1 |
| 3-3-pp | 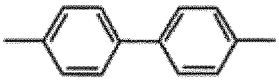 | 3-3 | 2 | 2 |
| 3-4-pp | 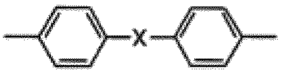 | 3-4 | 2 | 2 |
| 3-5-ppp | 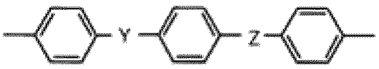 | 3-5 | 3 | 3 |

Table 2: Structure with para-position and meta-position mixed

| | Structure | Basic structure | Number of aromatic rings | Number of para substitutes |
|---|---|---|---|---|
| 3-3-mp | 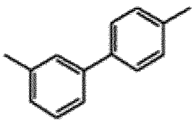 | 3-3 | 2 | 1 |
| 3-4-mp | 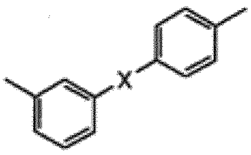 | 3-4 | 2 | 1 |
| 3-5-pmp | 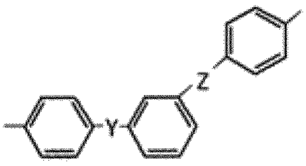 | 3-5 | 3 | 2 |
| 3-5-mpp | 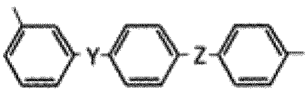 | 3-5 | 3 | 2 |

(continued)

| | Structure | Basic structure | Number of aromatic rings | Number of para substitutes |
|---|---|---|---|---|
| 3-5-mmp | 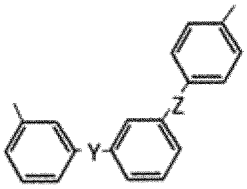 | 3-5 | 3 | 1 |
| 3-5-mpm | 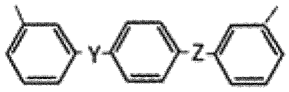 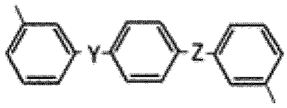 | 3-5 | 3 | 1 |

The aforementioned explanation regarding the meta and para positions is applied to substituents relating to amide bonding. Even if the aromatic polyamide has other substituents, they are not counted as para-substitutes. For example, even if a para-position of a meta-substitute with respect to -X- in a structure expressed by the formula (3-4-mp) is substituted with a chloro group, this is not counted as a para-substitute.

Here, the ratio (mole fraction) of the number of moles of chloro groups to the total number of moles of aromatic rings is preferably 20% or higher, more preferably 40% or higher, and even more preferably 80% or higher. When the ratio of the number of moles of chloro groups is within the aforementioned range, more excellent gas permeability or separation selectivity can be obtained under high temperature.

A contact angle with water in the porous support layer is preferably 75° or less, more preferably 55° or less, even more preferably 52° or less, and particularly preferably 50° or less. The aromatic polyamide contained in the porous support layer is a hydrophilic polymer. Accordingly, the porous support layer in which the contact angle with water is within the aforementioned range can be obtained due to the hydrophilicity of the aromatic polyamide.

The porous support layer preferably contains the aforementioned polymer as its major component. Specifically, in the porous support layer, the ratio of the aforementioned polymer (if the porous support layer contains a plurality of polymers, the sum total of each ratio of the polymers) is preferably 70 wt% or higher, 80 wt% or higher, or 90 wt% or higher. Further, the porous support layer may consist of only the aforementioned polymer.

As for the pore size and pore distribution of the porous support layer, in the surface where the porous support layer abuts against the separation functional layer, the number of pores having a size (diameter) of 8 nm or more is preferably 15% or lower of the total number of pores, and more preferably 11% or lower. The pores can be paraphrased as "concave portions". Each concave portion is a portion placed among convex portions. That is, the porous support layer has fine irregularities in its surface. Each convex portion serves as a scaffold (start point) for growth of crosslinked polyamide in condensation polymerization. In the case where the number of pores having a size of 8 nm or more is 15% or lower of the total number of pores, that is, in the case where sites in which convex portions are separated at a distance of 8 nm or more in the surface of the porous support layer are fewer, there is an advantage that defects are less likely to occur in the crosslinked polyamide.

In addition, the maximum pore size in the surface of the porous support layer is preferably 12 nm or less. When the maximum pore size in the surface of the porous support layer is 12 nm or less, the distance between the scaffolds is 12 nm or less. Thus, the occurrence of defects is further reduced.

The pore size in the surface of the porous support layer is measured as follows. Arbitrary 5 places in the surface of the porous support layer are imaged by an SEM (0.3072 $\mu m^2$ at a magnification of 2,000,000 times) to obtain 5 images. Sizes of pores and the number of the pores are measured from the 5 SEM images.

The maximum pore size is an arithmetic mean value of three values obtained by excluding a smallest value and a largest value from maximum pore sizes obtained respectively from the 5 SEM images.

In addition, the ratio of the number of pores each having a size of 8 nm or more is calculated in the following manner. First, the number of pores having a size of 8 nm or more measured from each of the 5 SEM images is divided by the total number of pores in the image, and further multiplied by 100 to calculate the ratio of pores having a size of 8 nm or more. A smallest value and a largest value are excluded from the 5 values obtained thus to obtain three numerical values. An arithmetic mean of the three numerical values is regarded as the ratio of the number of pores having a size

of 8 nm or more in this membrane.

Incidentally, before the measurement of the sizes of pores and the numbers of the pores, the images may be corrected so as to remove not pores but shadows cast due to the granular structure of the surface from the images.

In addition, in order to observe the surface of the porous support layer in which the separation functional layer has been provided, the separation functional layer is first removed from the separation membrane to expose the surface of the porous support layer. According to an example of the aforementioned removal method, the separation membrane is immersed in an aqueous solution of sodium hypochlorite. However, the removal method is not particularly limited.

The pore size and the pore distribution inside the porous support layer are not particularly limited. For example, the pore size may be uniform all over the porous support layer, or may increase gradually from the surface where the porous support layer abuts against the separation functional layer toward the other surface.

The thicknesses of the substrate and the porous support layer affect the strength of the separation membrane and the filling density in an element formed out of the separation membrane. In order to obtain the mechanical strength and the filling density sufficiently, the total thickness of the substrate and the porous support layer is preferably 30 μm or more and 300 μm or less, and more preferably 100 μm or more and 220 μm or less. In addition, the thickness of the porous support layer is preferably 20 μm or more and 100 μm or less.

The "thickness" is obtained by calculating a mean value of 20 thicknesses measured at an interval of 20 μm in the surface direction (a direction perpendicular to the thickness) of the porous support layer.

(3-3) Separation Functional Layer

The separation functional layer contains at least one kind of chemical compound selected from polyamide, graphene, MOF (Metal Organic Framework), and COF (Covalent Organic Framework). Those raw materials have a pore size or affinity suitable for selectively permeating hydrogen from mixed gas containing the hydrogen. In accordance with use conditions and intended performance, the molecular structure and the layer structure of the chemical compound forming the separation functional layer can be changed based on techniques known about separation membranes. In addition, regardless of the chemical composition of the separation functional layer, it is preferable to reduce presence of a structural defect of 1 nanometer or more in the separation functional layer as much as possible.

The separation functional layer may contain two or more kinds of chemical compounds selected from polyamide, graphene, MOF, and COF. The contents of those compounds in the separation functional layer can be changed to adjust the hydrogen selective permeability and the strength of the separation functional layer within desired ranges.

The separation functional layer preferably contains at least polyamide from the viewpoint of the membrane forming stability, the hydrogen permeability and the other gas blocking performance.

The separation functional layer preferably contains crosslinked polyamide, and preferably includes a thin film containing crosslinked polyamide. The crosslinked polyamide is preferably a polycondensate of polyfunctional amine with polyfunctional acid halide. Specifically, the ratio of the crosslinked polyamide in the separation functional layer is preferably 50 wt% or higher, 70 wt% or higher, or 90 wt% or higher. The separation functional layer may be formed out of only the crosslinked polyamide. In the case where the separation functional layer contains the crosslinked polyamide by 50% or higher, high membrane performance can be likely to be achieved.

In the case where the separation functional layer contains crosslinked polyamide, it is preferable that the number A of amino groups, the number B of carboxyl groups and the number C of amide groups measured in the separation functional layer satisfy the following relationship:

$$(A+B)/C \leq 0.66$$

Here, the ratio among the number A of amino groups, the number B of carboxyl groups and the number C of amide groups can be obtained by $^{13}C$ solid-state NMR spectroscopy on the separation functional layer. Specifically, the substrate is peeled out from 5 $m^2$ of the separation membrane to obtain a laminate of the separation functional layer and the porous support layer. The porous support layer is dissolved into a solvent to remove the porous support layer from the laminate, thereby obtaining the separation functional layer. On the separation functional layer obtained thus, analysis is performed using a CP/MAS-$^{13}C$ solid-state NMR method or a DD/MAS-$^{13}C$ solid-state NMR method. The ratio among the numbers of the respective functional groups can be calculated based on comparison among integrated values of carbon peaks of each of the functional groups or integrated values of carbon peaks to which each of the respective functional groups is bonded.

The amino groups and the carboxyl groups are functional groups having high affinity to carbon dioxide. Accordingly, as the amount of those functional groups in the separation functional layer is reduced, the affinity of the separation functional layer to carbon monoxide and carbon dioxide is reduced. Thus, only the permeability of carbon monoxide and carbon dioxide is lowered without lowering the permeability of light gases such as hydrogen and helium.

As a result, the separation selectivity of the light gases from carbon monoxide or carbon dioxide is improved.

In addition, when the ratio of amide groups among the functional groups in the crosslinked polyamide is high, it means that many crosslinks have been formed in the crosslinked polyamide. The many crosslinks reduce the pore size to lower the permeability of nitrogen, carbon monoxide, carbon dioxide, hydrocarbons, hydrogen sulfide, and sulfur dioxide gas, which are larger in size than the light gasses such as hydrogen and helium. That is, the high ratio of the amide groups improves the separation selectivity of the light gases from nitrogen, carbon monoxide, carbon dioxide, hydrocarbons, hydrogen sulfide, or sulfur dioxide gas.

Incidentally, in ascending order of molecular size of each gas, hydrogen, carbon dioxide, carbon monoxide, nitrogen, and sulfur components (hydrogen sulfide and sulfur dioxide gas) are arranged in this order. Carbon monoxide and nitrogen have substantially the same size as each other. Gases having a larger difference in molecular size therebetween can be separated easily. For example, there is a tendency that the separation selectivity of hydrogen from nitrogen, carbon monoxide, hydrocarbons, hydrogen sulfide or sulfur dioxide gas is higher than the separation selectivity of hydrogen from carbon dioxide.

The crosslinked polyamide contained in the separation functional layer may be fully aromatic polyamide or fully aliphatic polyamide or may contain an aromatic part and an aliphatic part together. In order to achieve higher performance, it is preferable that the crosslinked polyamide is fully aromatic polyamide. That is, polyfunctional amine and polyfunctional acid halide which are monomer components in the crosslinked polyamide belong to at least one of polyfunctional aromatic amine and polyfunctional aliphatic amine and at least one of polyfunctional aromatic acid halide and polyfunctional aliphatic acid halide, respectively, and may be combined desirably. The polyfunctional aromatic amine and the polyfunctional aromatic acid halide are preferably selected as the polyfunctional amine and the polyfunctional acid halide, respectively.

In the present description, the "polyfunctional aromatic amine" means aromatic amine which contains two or more amino groups belonging to at least one kind of primary amino group and secondary amino group in one molecule and in which at least one of the amino groups belongs to the kind of primary amino group. The "polyfunctional aliphatic amine" means aliphatic amine which contains two or more amino groups belonging to at least one kind of primary amino group and secondary amino group in one molecule.

Examples of the polyfunctional aromatic amine include polyfunctional aromatic amine in which two amino groups are bonded with an aromatic ring in any positional relation of ortho, meta and para positions, such as o-phenylenediamine, m-phenylenediamine, p-phenylenediamine, o-xylylenediamine, m-xylylenediamine, p-xylylenediamine, o-diaminopyridine, m-diaminopyridine, p-diaminopyridine, etc.; and 1,3,5-triaminobenzene, 1,2,4-triaminobenzene, 3,5-diaminobenzoic acid, 3-aminobenzylamine, 4-aminobenzylamine, 2,4-diaminothioanisole, 1,3-diaminothioanisole, 1,3-diamino-5-(dimethylphosphino)benzene, (3,5-diaminophenyl) dimethylphosphine oxide, (2,4-diaminophenyl) dimethylphosphine oxide, 1,3-diamino-5-(methylsulfonyl)benzene, 1,3-diamino-4-(methylsulfonyl)benzene, 1,3-diamino-5-nitrosobenzene, 1,3-diamino-4-nitrosobenzene, 1,3-diamino-5-(hydroxyamino)benzene, and 1,3 -diamino-4-(hydroxyamino)benzene.

On the other hand, examples of the polyfunctional aliphatic amine include ethylenediamine, 1,3-diaminopropane, 1,4-diaminobutane, 1,5-diaminopentane, piperazine, 2-methylpiperazine, 2,4-dimethylpiperazine, 2,5-dimethylpiperazine, 2,6-dimethylpiperazine, etc.

The polyfunctional acid halide is also expressed as polyfunctional carboxylic acid derivative, which designates an acid halide containing at least two halogenated carbonyl groups in one molecule. Examples of trifunctional aromatic acid halides include trimesoyl chloride, etc. Examples of bifunctional aromatic acid halides include biphenyldicarbonyl dichloride, azobenzenedicarbonyl dichloride, terephthaloyl chloride, isophthaloyl chloride, naphthalenedicarbonyl dichloride, oxalyl chloride, etc. In consideration of reactivity to the polyfunctional amine, the polyfunctional acid halide is preferably a polyfunctional acid chloride. Further, in consideration of the separation selectivity and the heat resistance of the membrane, it is preferable that the polyfunctional acid halide is a polyfunctional acid halide containing two to four carbonyl chloride groups in one molecule. Trimesoyl chloride is particularly preferred in terms of availability and easiness to handle.

Each of those kinds of polyfunctional amines and acid halides may be used alone, or two or more kinds of them may be used together.

The crosslinked polyamide contained in the separation functional layer may further contain a nitro group. The nitro group may be contained in a monomer during reaction for forming the crosslinked polyamide, or may be introduced into the crosslinked polyamide by chemical conversion after the formation thereof. In view of availability of the monomer and easiness to handle it, it is preferable that the chemical effect is applied to the crosslinked polyamide after the formation.

The presence of the nitro group can be confirmed by an N1s peak obtained by X-ray photoelectron spectroscopy (XPS). The N1s peak is caused by core electrons in nitrogen atoms. It is considered that the N1s peak is constituted by a component derived from N-C and a component derived from NOx ($x \geq 2$). The component derived from N-C appears near 400 eV, and the component derived from NOx ($x \geq 2$) appears near 406 eV.

Further, the crosslinked polyamide contained in the separation functional layer preferably contains fluorine atoms bonded to carbon atoms. Polyamide is high in cohesiveness and low in dissolubility of light gas having low

cohesiveness, such as hydrogen or helium. However, when fluorine atoms are introduced into carbon atoms to lower the cohesiveness of the polyamide, the dissolubility of light gas is improved to enhance the separation selectivity of the light gas/nitrogen.

The ratio of the number of fluorine atoms to the number of carbon atoms determined by X-ray photoelectron spectroscopy (XPS) is preferably 0.1% or higher, and 12% or lower. The ratio may be 8% or lower, or 2% or lower. In the case where the ratio is 0.1% or higher, the cohesiveness of the crosslinked polyamide is reduced to improve the separation selectivity. On the other hand, in the case where the ratio is 12% or lower, good pressure resistance can be obtained.

Particularly when fluorine is bonded to a carbon atom in aromatic polyamide, the fluorine is bonded to a carbon atom of an aromatic ring. The aromatic ring bonded by the fluorine atom may be derived from, among monomers forming the crosslinked polyamide, either aromatic amine or the acid halide.

The ratio of (number of fluorine atoms/number of carbon atoms) is an arithmetic mean value of values obtained by XPS at arbitrary 10 places of the separation membrane. In addition, since the peak derived from C-F (carbon-fluorine bond) is measured at 686 eV, the existence/absence of a fluorine group bonded to a carbon atom can be analyzed by the existence/absence of the peak.

The separation functional layer preferably includes a thin film containing crosslinked polyamide having any one of the aforementioned compositions. The separation functional layer may include a thin film having polyamide as its major component, and at least one kind of chemical compound selected from graphene, MOF, and COF carried by the thin film. The separation functional layer having such a configuration has high strength. In addition, the performance of the separation functional layer can be controlled by the molecular structure of graphene, MOF or COF, the content thereof in the separation functional layer, and the dispersion state thereof in the separation functional layer.

In addition, preferably in the separation functional layer, the thin film has a repeating structure of irregularities, that is, a pleated structure.

In any one of the aforementioned configurations, the thickness of the separation functional layer is, depending on the intended separation performance and the intended gas permeability, preferably 0.01 $\mu$m to 1 $\mu$m, or 0.1 $\mu$m to 0.5 $\mu$m.

2. Method for Producing Separation Membrane

An example of a method for producing the separation membrane will be described below. Particularly the following description will be made about a step of forming the porous support layer and a step of forming the separation functional layer. The aforementioned fabric which is commercially available may be used as the substrate.

(2-1) Formation of Porous Support Layer

A method for producing the porous support layer includes a step of dissolving a polymer as a constituent component of the porous support layer into a good solvent for the polymer to prepare a polymer solution, a step of applying the polymer solution to the substrate, and a step of immersing the polymer solution in a coagulation bath to coagulate the polymer. The coagulated polymer corresponds to the porous support layer.

The chemical structure of the polymer as a constituent element of the porous support layer has been described above.

NMP or a mixed solvent of NMP and another organic polar solvent than NMP is preferably used as the solvent for the polymer solution. NMP is excellent in compatibility with the aforementioned polymer, and useful for forming the porous support layer. In addition, by using the mixed solvent, the rate of the solvent flowing for forming the porous support layer can be adjusted suitably, so that pore size distribution, density, etc. can be adjusted within desired ranges. A solubility parameter value of the organic polar solvent is preferably 11.0 or more and 13.2 or less. In the case where the solubility parameter value of the organic polar solvent is within the aforementioned numerical range, the affinity to the aforementioned polymer of the organic polar solvent is worse than that of NMP Thus, phase separation of the polymer proceeds rapidly. As a result, there is an advantage that formation of large pores due to flowing out of the solvent during the phase separation can be inhibited. In the case where the aforementioned solubility parameter value is larger than 13.2, the phase separation is not accelerated. In the case where the solubility parameter value is 11.0 or more, the polymer is less likely to be precipitated in the polymer solution. Thus, the porous support layer can be formed to have a uniform structure.

The aforementioned organic polar solvent may be one kind selected from the group consisting of acetone, anisole, THF, cyclohexanone, aniline, DMAc, etc., though not particularly limited. Among them, acetone is preferably used.

The mixture ratio in the mixed solvent is not particularly limited. NMP is preferably 60 wt% or higher and 99 wt% or lower, and more preferably 70 wt% or higher and 90 wt% or lower. Even more preferably, NMP is 80 wt% or

higher and 90 wt% or lower. In the case where the mixture ratio of NMP in the mixed solvent is higher than 99 wt%, the ratio of the aforementioned organic polar solvent mixed with NMP is too low to achieve the aforementioned effect. In the case where the mixture ratio of NMP is lower than 60 wt%, the viscosity of the polymer solution increases so that the porous support layer cannot be formed easily.

The concentration of the polymer in the solution to be used for forming the porous support layer is not particularly limited, but it is preferably 2 wt% or higher and 15 wt% or less, and more preferably 4 wt% or higher and 12 wt% or lower. When the concentration of the polymer is set at 2 wt% or higher, the internal structure can be prevented from being too empty. When the concentration of the polymer is set at 15 wt% or lower, the viscosity of the polymer solution can be prevented from being extremely high.

In addition, the method for forming the porous support layer may further include a step of polymerizing monomers to generate a polymer for forming the porous support layer.

Aromatic polyamide which is an example of the polymer is obtained by solution polymerization or interfacial polymerization using acid chloride and diamine as monomers. In the solution polymerization, an aprotonic organic polar solvent such as N-methylpyrrolidone (NMP), dimethylacetamide (DMAc), dimethylformamide (DMF), etc. can be used as the solvent. On the other hand, in the interfacial polymerization, a solution obtained by dissolving acid chloride into such an organic solvent, and a solution obtained by dissolving diamine into an aqueous medium are used.

When polyamide is generated using acid chloride and diamine as monomers, hydrogen chloride is produced as a byproduct. In order to neutralize the hydrogen chloride, an inorganic neutralizer such as calcium hydroxide, calcium carbonate, lithium carbonate, etc., or an organic neutralizer such as ethylene oxide, propylene oxide, ammonia, triethylamine, triethanolamine, diethanolamine, etc. is used.

When the polymer is generated by polymerization of the monomers, the polymer can be obtained in a state where the polymer has been dissolved in the solvent. Accordingly, the polymer solution can be used directly as a membrane forming raw solution. Alternatively, the polymer may be isolated once and then dissolved into the aforementioned organic solvent or an inorganic solvent such as sulfuric acid to prepare a membrane forming raw solution.

(2-2) Formation of Separation Functional Layer

<Production of Crosslinked Polyamide>

The step of forming the separation functional layer containing the crosslinked polyamide will be described below. The step of forming the separation functional layer includes a step of forming the crosslinked polyamide by interfacial polycondensation between polyfunctional amine and polyfunctional acid halide on the porous support layer using an aqueous solution containing the polyfunctional amine and an organic solvent solution containing the polyfunctional acid halide. The step of forming the crosslinked polyamide includes (a) a step of applying the aqueous solution containing the polyfunctional amine to the porous support layer, and (b) a step of applying the organic solvent solution containing the polyfunctional acid halide to the porous support layer.

In the step (a), the concentration of the polyfunctional amine in the polyfunctional amine aqueous solution is preferably within a range of 0.1 wt% or higher and 20 wt% or lower, and more preferably within a range of 0.5 wt% or higher and 15 wt% or lower. In the case where the concentration of the polyfunctional amine is within such a range, sufficient separation selectivity and permeability can be obtained. A surfactant, an organic solvent, an alkaline compound, an antioxidant, etc. may be contained in the polyfunctional amine aqueous solution as long as they do not interfere reaction between the polyfunctional amine and the polyfunctional acid halide. The surfactant has an effect of improving the wettability of the surface of the porous support layer to reduce the interfacial tension between the polyfunctional amine aqueous solution and a nonpolar solvent. The organic solvent may act as a catalyst of interfacial polycondensation reaction. Thus, when the organic solvent is added, the interfacial polycondensation reaction may be able to be performed efficiently.

It is preferable to apply the polyfunctional amine aqueous solution onto the porous support layer uniformly and continuously. Specific examples thereof include a method for coating the porous support layer with the polyfunctional amine aqueous solution, and a method for immersing the porous support layer in the polyfunctional amine aqueous solution. The coating is performed by dropping, showering, spraying, applying with a roller, or the like. In the case where the porous support layer has been formed on the substrate, a laminate of the substrate and the porous support layer, that is, the support layer may be immersed in the polyfunctional amine aqueous solution.

After the polyfunctional amine aqueous solution is applied onto the porous support layer, liquid removal is performed not to leave any droplet behind on the membrane. A place where a droplet remains may form a defect on the membrane to lower the performance of the membrane. Such a defect can be prevented by the liquid removal. A method in which the support membrane after contact with the polyfunctional amine aqueous solution is retained in a vertical direction to allow an excessive aqueous solution to flow down by gravity, a method in which a flow of gas such as nitrogen is sprayed from an air nozzle to perform liquid removal forcedly, and so on, can be used. In addition, after the liquid

removal, the membrane surface may be dried to remove a part of moisture of the aqueous solution.

The contact time between the porous support layer and the polyfunctional amine aqueous solution, that is, the time from the application until the liquid removal is preferably 1 second or more and 10 minutes or less, and more preferably 10 seconds or more and 3 minutes or less.

In the step (b), the concentration of the polyfunctional acid halide in the organic solvent solution is preferably within a range of 0.01 wt% or higher and 10 wt% or lower, and more preferably within a range of 0.02 wt% or higher and 2.0 wt% or lower. When the concentration is set at 0.01 wt% or higher, a sufficient reaction rate can be obtained. When the concentration is set at 10 wt% or lower, occurrence of side reaction can be suppressed. It is further preferable that an acylation catalyst such as DMF is contained in the organic solvent solution because the interfacial polycondensation can be accelerated.

The organic solvent is preferably an organic solvent which is immiscible with water and which can dissolve the polyfunctional acid halide not to destroy the support membrane. Any organic solvent can be used as long as it is inactive to the polyfunctional amine compound and the polyfunctional acid halide. Preferred examples of the organic solvent include hydrocarbon compounds such as n-hexane, n-octane, n-decane, isooctane, etc.

The method for applying the polyfunctional acid halide solution onto the porous support layer may be performed in the same manner as the method for applying the polyfunctional amine aqueous solution onto the porous support layer. However, it is preferable that the polyfunctional acid halide solution is applied only to one surface of the porous support layer. Therefore, the polyfunctional acid halide solution is applied more preferably by coating than by immersing.

On this occasion, the porous support layer coated with the organic solvent solution of the polyfunctional acid halide may be heated. The temperature for the heating treatment is 50°C or higher and 180°C or lower, and preferably 60°C or higher and 160°C or lower. When the porous support layer is heated to 60°C or higher, lowering of reactivity caused by monomer consumption during interfacial polymerization reaction can be compensated with the effect of accelerating the reaction due to the heat. When the porous support layer is heated to 160°C or lower, the solvent can be prevented from entirely evaporating to lower the reaction efficiency extremely.

In addition, the time of the heating treatment in each case is preferably 5 seconds or more and 180 seconds or less. In the case where the time of the heating treatment is set at 5 seconds or more, the effect of accelerating the reaction can be obtained. In the case where the time of the heating treatment is set at 180 seconds or less, the solvent can be prevented from entirely evaporating. As a result, the molecular weight of the polyamide increases to lower the functional group ratio (A+B)/C expressed by the number A of amino groups, the number B of carboxyl groups and the number C of amide groups. Thus, the separation selectivity is improved.

<Introduction of Fluorine>

The crosslinked polyamide is produced under the existence of a fluorine containing compound having a reactive group, so that fluorine can be introduced into the crosslinked polyamide. Examples of such compounds include perfluorobenzoyl chloride, and tetrafluoroisophthaloyl chloride.

Chemical treatment may be performed on the obtained crosslinked polyamide to introduce fluorine thereto. Specifically, it is preferable to bring a fluorinating agent into contact with the separation membrane. Examples of the fluorinating agent include 1-chloromethyl-4-fluoro-1,4-diazoniabicyclo[2.2.2]octane bis(tetrafluoroborate) (Selectfluor (registered trademark)), N-fluorobenzenesulfonimide, 1-fluoropyridinium tetrafluoroborate, etc.

A method of reaction between the fluorinating agent and the crosslinked polyamide is not particularly limited. For example, a method for immersing a gas separation composite membrane of the crosslinked polyamide in an aqueous solution of the fluorinating agent is preferred.

The concentration of the fluorinating agent is preferably 0.01 wt% to 10 wt%, and more preferably 0.1 wt% to 1 wt%.

As for the method for the chemical treatment, it is preferable to perform the treatment on an aqueous solution containing a water-soluble fluorinating agent at 10°C or higher and 100°C or lower and more preferably at 20°C or higher and 80°C or lower. In the case where the temperature is set at 10°C or higher, the efficiency of the reaction can be improved. In the case where the temperature is set at 100°C or lower, decomposition of the fluorinating agent can be inhibited.

The contact time between the fluorinating agent aqueous solution and the crosslinked polyamide is preferably 30 seconds to one day. In consideration of practical use and reaction efficiency, the contact time is more preferably 1 minute to 30 minutes.

(2-3) Post-Treatment Step

The method for producing the separation membrane may include a step of performing chemical treatment after the separation functional layer is formed. Examples of the chemical treatment include the aforementioned fluorine introduction, oxidation, etc.

In the oxidation treatment, an amino group or a carboxyl group belonging to polyamide is chemically converted into a nitro group structure. In this manner, the functional group ratio (A+B)/C can be reduced. Examples of oxidizers include water-soluble compounds such as hydrogen peroxide, peracetic acid, sodium perborate, and potassium peroxymonosulfate, etc.

A method for reaction between the oxidizer and the polyamide is not particularly limited. For example, a method of immersing the separation membrane in an aqueous solution of the oxidizer is preferred.

The concentration of the oxidizer is preferably 0.1 wt% to 10 wt%, and more preferably 0.5 wt% to 3 wt%.

The pH of the aqueous solution of the oxidizer is not particularly limited as long as it is within a range allowing the oxidizer to exhibit its sufficient oxidizability. The pH is preferably within a range of 1.5 to 7.0.

As for the method for the chemical treatment, the aqueous solution containing the oxidizer is preferably treated at 10°C or higher and 100°C or lower, and more preferably at 20°C or higher and 80°C or lower. In the case where the temperature is set at 10°C or higher, the reaction efficiency can be improved. In the case where the temperature is set at 100°C or lower, decomposition of the oxidizer can be inhibited.

The contact time between the oxidizer aqueous solution and the polyamide is preferably 30 seconds to one day. In consideration of practical use and reaction efficiency, the contact time is more preferably 1 minute to 30 minutes.

After the contact with the oxidizer, the polyamide is brought into contact with a reducer in order to suspend the oxidation reaction. Here, the reducer is not particularly limited as long as it causes oxidation-reduction reaction with the oxidizer to be used. From the viewpoint of availability and easiness to handle, it is preferable to use any one of sodium hydrogen sulfite, sodium sulfite, and sodium thiosulfate. In addition, those are preferably used as a 0.01 wt% to 1 wt% aqueous solution.

The contact time with the reducer is not particularly limited as long as oxidation reaction can be suspended. Typically the immersing time is preferably 1 minute to 20 minutes.

After the contact with the reducer, the membrane is preferably rinsed with water in order to wash out the reducer remaining on the polyamide composite film.

(2-4) Drying Step

The method for producing the separation membrane may further include a drying step. A drying method is not particularly limited. Water may be removed by vacuum drying, freeze drying, or heating to high temperature. Alternatively, the membrane may be immersed in an alcohol solvent such as ethanol or isopropanol or a hydrocarbon solvent to replace water by the solvent, and the solvent may be then removed under the aforementioned drying conditions. The heating to high temperature is particularly preferred to since a dense functional layer is easily obtained. A method for the heating to high temperature is not particularly limited. It is desired to perform the heating in an oven at 30°C to 200°C, more preferably 50°C to 150°C for 1 minute or more. In the case where the temperature is set at 30°C or higher, moisture can be removed efficiently. In the case where the temperature is set at 200°C or lower, deformation due to the difference in thermal shrinkage between the functional layer and the substrate can be prevented.

## EXAMPLES

The present invention will be described below more in detail along its examples. However, the present invention is not limited by the examples at all. Unless specifically mentioned, the temperature will be 25°C in the following description. In addition, mass% will be denoted as wt%.

### I. Separation Membrane with Polyamide Separation Functional Layer

[Production Examples (1) to (8) of Separation Membrane]

(Formation of Porous Support Layer)

Under the condition of 25°C, a solution of 16.0 wt% polysulfone (PSf) in DMF was cast to be 200 μm thick on nonwoven fabric (made of polyester and having a gas permeability of 2.0 $cc/cm^2/sec$) serving as a substrate, immersed in pure water immediately and allowed to stand still for 5 minutes. In this manner, a porous support layer was formed. Thus, a support membrane including the substrate and the porous support layer was produced.

(Formation of Separation Functional Layer)

The support membrane obtained by the aforementioned operation was immersed in an aqueous solution of

6.0 wt% m-PDA for 2 minutes. Next, the support membrane was lifted up gradually in a vertical direction, and sprayed with nitrogen from an air nozzle to remove an excessive amine aqueous solution from the surface of the porous support layer. Next, a TMC (trimesoyl chloride) solution having a composition shown in the following Table 3 was applied to the porous support layer so that all the surface of the porous support layer got wet with the TMC solution. The membrane was allowed to stand still for a time shown in the following Table 3. Next, the membrane surface was retained vertically for 1 minute to remove an excessive solution from the surface of the porous support layer. The membrane was allowed to stand still (for polycondensation) in an oven under conditions shown in the following Table 3. Next, the membrane was washed with water at 50°C for 10 hours. Further, the membrane was dried in an oven at 120°C for 30 minutes. Thus, a separation membrane was obtained. In some production examples, post-treatment was performed after the washing and before the drying.

[Table 3]

| Separation membrane | TMC solution | | Still stand | Polymerization | Post -treatment |
|---|---|---|---|---|---|
| | Concentration (wt%) | Solvent | | | |
| (1) | 0.16 | undecane | 1 min | 25°C 120 sec | - |
| (2) | 0.16 | decane | 120 sec | 25°C 120 sec | - |
| (3) | 0.10 | hexane | 1 min | 25°C 60 sec | - |
| (4) | 0.20 | hexane | 1 min | 120°C 3 min | - |
| (5) | 0.16 | undecane | 30 sec | 100°C 60 sec | - |
| (6) | 0.16 | decane | 30 sec | 100°C 60 sec | - |
| (7) | 0.16 | undecane | 30 sec | 100°C 60 sec | immersed in 1 wt% potassium peroxomonosulfate aqueous solution of pH 2.2 at 25°C for 30 min |
| (8) | 0.16 | decane | 30 sec | 100°C 60 sec | immersed in 1 wt% potassium peroxomonosulfate aqueous solution of pH 2.2 at 25°C for 30 min |

[Determination of Functional Group Ratio]

The substrate was physically peeled out from 5 $m^2$ of the separation membrane to thereby recover the porous support layer and the separation functional layer. The laminate of the porous support layer and the separation functional layer was allowed to stand still at 25°C for 24 hours to be thereby dried. After that, the laminate was put bit by bit into a beaker containing dichloromethane, and stirred to thereby dissolve polymer forming the porous support layer. Insolubles in the beaker were recovered by a paper filter, and washed with dichloromethane.

The separation functional layer recovered thus was dried by a vacuum drier to remove the residual dichloromethane. The separation functional layer was made into a powdered sample by freezing and crushing, and enclosed into a sample tube. Using this sample, $^{13}C$ solid-state NMR spectroscopy was performed based on a DD/MAS method. CMX-300 made by Chemagnetics, Inc. can be used for the $^{13}C$ solid-state NMR spectroscopy. An example of measurement conditions is as follows.

Reference substance: polydimethylsiloxane (internal standard: 1.56 ppm)

Sample rotation frequency: 10.5 kHz

Pulse repetition time: 100 s

Based on obtained spectra, the ratio (A+B)/C among the number A of amino groups, the number B of carboxyl groups and the number C of amide groups was obtained from areas of peaks derived from carbon atoms to which the

respective functional groups are bonded.

[Hydrogen Gas Permeability and Selective Permeability]

Using an apparatus shown in FIG. 9, the gas permeability of the separation membrane was measured according to JIS K 7126-2B (2016). In a testing cell 80 having a supply-side cell and a permeation-side cell, the separation membrane was retained between the supply-side cell and the permeation-side cell. The flow rate of gas to be supplied to the supply-side cell from a gas tank 81 was adjusted by a mass flow controller 82. On the other hand, argon serving as sweep gas was supplied to the permeation-side cell from a gas tank 83. The flow rate of the sweep gas was adjusted by a mass flow controller 84.

- Effective membrane area of separation membrane: 25 $cm^2$
- Cell temperature: 80°C
- Supplied gas: pure gas of hydrogen or carbon dioxide with 1 atm and flow rate of 100 $cm^3$/min
- Sweep gas: argon with 100 $cm^3$/min and 1 atm

The permeated gas and sweep gas flowing out from the testing cell 80 were flowed into a gas chromatograph 86 having a TCD (Thermal Conductivity Detector) so as to measure the concentration of hydrogen or carbon dioxide. In addition, the destination of the gas flow was changed over from the gas chromatograph 86 to a soap film flowmeter 87 by a valve 85 so as to measure the flow rate. Gas permeability (nmol/$m^2$/s/Pa) in each separation membrane was obtained from the gas concentration and the flow rate.

The permeability of hydrogen one hour after the start of the gas supply was divided by the permeability of carbon dioxide so as to calculate $H_2/CO_2$ separation selectivity.

[Power Generation Test]

Power generation tests were performed using power generation systems 13 and 101 shown in FIG. 5 and FIG. 6.

In the power generation system 13 shown in FIG. 5, out of the return pipe arrangements 23 to 25 of the power generation system 11 in FIG. 1, the return pipe arrangement 24 was used. On the other hand, the power generation system 101 in FIG. 6 was the same as the power generation system 13, except that the power generation system 101 did not include the separator 5 and the non-permeated gas pipe arrangement 29, but included the return pipe arrangement 24 and the negative electrode exhaust gas pipe arrangement 28 directly branching from the mixed gas pipe arrangement 22.

(Control Test)

Power generation was started under the following conditions in the power generation system 101 in FIG. 6. A voltage value at which the voltage became constant was recorded as initial voltage V0.

*Condition 1

Fuel cell cell: JARI (Japan Automobile Research Institute) standard cell
Negative electrode and positive electrode membrane/electrode conjugant (conjugant of electrolyte membrane, negative electrode, positive electrode, and gas diffusion layer): PRIMEA (registered trademark) 5510 made by Japan Gore-Tex Inc.
Negative electrode/positive electrode catalyst: Pt (carried amount of 0.3 mg/$cm^2$)
Cell temperature: 80°C
Negative electrode/positive electrode electrode area; 50×50 $mm^2$
Current density: 1000 mA/$cm^2$
Gas supplied from negative electrode gas tank: pure hydrogen (purity >99.999%)
Flow rate of gas supplied to negative electrode: 1000 mL/min
(when exhaust gas was circulated, the amount of gas supplied from the tank was adjusted so that the total flow rate of the circulating gas and gas supplied newly reached 1000 mL/min) Gas supplied from positive electrode gas tank: oxygen mixed gas (volume fraction of oxygen/nitrogen = 20%/80%)
Flow rate of gas supplied to positive electrode: 1050 mL/min

Next, the gas to be supplied to the negative electrode was changed over to hydrogen mixed gas doped with impurities (impurities: carbon dioxide gas, carbon monoxide gas, hydrogen sulfide gas, and sulfur dioxide gas) (condition 2). When voltage became constant after the changeover, the value of the voltage was recorded as a voltage value V1. Table 4 shows the ratio (V1/V0) of the voltage V1 to the initial voltage V0 as voltage drop rate in the case where no separation membrane was used.

(Test Using Separator)

In the system 13 in FIG. 5, power generation was started under the aforementioned conditions 1 using one spiral-type element with an effective membrane area of 1 $m^2$ as the separator 5. The spiral-type element had nets each having a thickness of 120 μm and a pore size of 0.8 mm as supply-side and permeation-side flow channel materials. When voltage became constant, the value of the voltage was recorded as voltage V2. Table 4 shows the ratio (V2/V0) of the voltage V2 to the aforementioned initial voltage V0 as voltage drop rate for the separation membrane in each production example.

[Table 4]

| Separation membrane | Functional group ratio (A+B)/C | $H_2$ permeability (nmol/$m^2$/s/Pa) | $H_2/CO_2$ selectivity | Voltage drop rate (%) |
|---|---|---|---|---|
| - | - | - | - | >50 |
| (1) | 1.0 | 18 | 8.2 | 21 |
| (2) | 1.0 | 21 | 8.4 | 21 |
| (3) | 1.1 | 100 | 4.8 | 28 |
| (4) | 0.71 | 28 | 9.1 | 20 |
| (5) | 0.55 | 22 | 12 | 12 |
| (6) | 0.65 | 18 | 20 | 5.0 |
| (7) | 0.51 | 20 | 15 | 12 |
| (8) | 0.60 | 17 | 24 | 1.5 |

II. Separation Membrane with Separation Functional Layer of Fluorine Containing Polyamide

[Production Examples (11) to (17) of Separation Membrane]

Separation membranes were obtained in the same operation as in the production example (1), except for the conditions shown in Table 5. In addition, in some production examples, each membrane was washed with water at 50°C for 10 hours after polycondensation, and then subjected to post-treatment before being dried.

[Table 5]

| Separation membrane | TMC solution | | | Polycondensation | Post -treatment |
|---|---|---|---|---|---|
| | TMC concentration (wt%) | Additive | Solvent | | |
| (1) | 0.16 | - | Undecane | 25°C 120 sec | - |
| (2) | 0.16 | - | Decane | 25°C 120 sec | - |
| (11) | 0.16 | - | Undecane | 25°C 120 sec | Dipped by 2 g/L into Selectfluor® aqueous solution at 20°C for 10 min, and then immersed in pure water at 25°C for 10 min |

(continued)

| Separation membrane | TMC solution | | | Polycondensation | Post -treatment |
|---|---|---|---|---|---|
| | TMC concentration (wt%) | Additive | Solvent | | |
| (12) | 0.16 | - | Undecane | 25°C 120 sec | Dipped by 4 g/L into Selectfluor® aqueous solution at 60°C for 10 min, and then immersed in pure water at 25°C for 10 min |
| (13) | 0.16 | - | Decane | 100°C 60 sec | Dipped by 2 g/L into Selectfluor® aqueous solution at 20°C for 10 min, and then immersed in pure water at 25°C for 10 min |
| (14) | 0.16 | - | Decane | 100°C 60 sec | Dipped by 2 g/L into Selectfluor® aqueous solution at 60°C for 10 min, and then immersed in pure water at 25°C for 10 min |
| (15) | 0.16 | 0.032 wt% pentafluorobenzoyl chloride | Undecane | 25°C 120 sec | - |
| (16) | 0.16 | 0.016 wt% pentafluorobenzoyl chloride | Undecane | 25°C 120 sec | - |
| (17) | 0.08 | 0.008 wt% tetrafluoroisophthaloyl chloride | Undecane | 25°C 120 sec | - |

[Ratio between Number of Fluorine Atoms and Number of Carbon Atoms]

The number of fluorine atoms and the number of carbon atoms in each separation membrane were calculated from results obtained under the following measurement conditions by X-ray photoelectron spectroscopy (XPS).

Measurement apparatus: Quantera SXM (made by PHI)
Excited X-ray: monochromatic Al K$\alpha$1, 2 radiation (1486.6 eV)
X-ray diameter: 0.2 mm

The ratio between the number of fluorine (F) atoms and the number of carbon (C) atoms was obtained from the ratio between intensity at the 1s peak of fluorine and intensity at the Is peak of carbon. When the obtained value is below 0.001, the ratio was regarded as undetectable and set at "0".

[Hydrogen Gas Permeability and Selective Permeability]

Permeability of each gas was measured in the same operation as in the aforementioned chapter I, except that pure gas of nitrogen was further used as gas to be supplied. The permeability of hydrogen was divided by the permeability

of carbon dioxide or the permeability of nitrogen so as to calculate $H_2/CO_2$ separation selectivity or $H_2/N_2$ separation selectivity.

[Pressure Resistance Test]

Using a testing cell having a supply-side cell and a permeation-side cell, the separation membrane was retained between the supply-side cell and the permeation-side cell. Hydrogen gas was applied to the separation membrane from the supply side and at a pressure of 1 MPa, and the gas was discharged from the permeation side.

On the separation membrane to which the pressure had been applied, the permeability of hydrogen and the permeability of carbon dioxide were measured in the aforementioned manner, so as to calculate the $H_2/CO_2$ separation selectivity.

[Table 6]

| Separation membrane | F/C atom number ratio | $H_2$ permeability (nmol/$m^2$/s/Pa) | $H_2/CO_2$ selectivity | $H_2/N_2$ selectivity | $H_2/CO_2$ selectivity after pressure applied |
|---|---|---|---|---|---|
| (1) | 0 | 18 | 8.2 | 10 | 6 |
| (2) | 0 | 21 | 8.4 | 16 | 9 |
| (11) | 0.002 | 24 | 14 | 31 | 14 |
| (12) | 0.018 | 27 | 23 | 77 | 23 |
| (13) | 0.001 | 23 | 13 | 24 | 13 |
| (14) | 0.007 | 26 | 21 | 60 | 21 |
| (15) | 0.080 | 27 | 19 | 35 | 19 |
| (16) | 0.047 | 24 | 21 | 42 | 21 |
| (17) | 0.12 | 31 | 15 | 21 | 13 |

[Power Generation Test]

A power generation test using the power generation system 13 was performed in the same manner as the power generation test in the aforementioned chapter I, and the voltage drop rate was measured on the separation membrane in each production example.

Further, a test was performed using a power generation system 14 in FIG. 7. In the power generation system 14, for the return pipe arrangements 23 to 25 of the power generation system 12 in FIG. 2, the return pipe arrangement 24 was used. That is, in the power generation system 14, positive electrode-side exhaust gas was mixed with negative electrode-side exhaust gas, and hydrogen gas separated therefrom by the separator 5 was recycled in the negative electrode.

On the other hand, the power generation system 102 in FIG. 8 was used for a control test. The power generation system 102 was a controlled system for the power generation system 14. The power generation system 102 had the same configuration as the power generation system 14, except that the power generation system 102 did not include the separator 5 and the non-permeated gas pipe arrangement 29, but included the return pipe arrangement 24 and the negative electrode exhaust gas pipe arrangement 28 directly branching from the mixed gas pipe arrangement 22.

Using the power generation system 102, an initial voltage V3 and a voltage V4 obtained by changing over negative electrode gas to mixed gas were measured in the same manner as in the test using the power generation system 101 in the aforementioned chapter I. A voltage drop rate V4/V3 is shown in Table 7 as a comparative value (a value in a case where no separation membrane was used) for the power generation system 14.

In addition, using the power generation system 14, a power generation test was performed on the same conditions as the power generation test in the aforementioned chapter I. Thus, a voltage value V5 was obtained. A voltage drop rate V5/V3 was calculated as shown in Table 7.

[Table 7]

| Separation membrane | Voltage drop rate (%) | |
|---|---|---|
| | System 13 | System 14 |
| - | >50 (System 101) | >50 (System 102) |
| (1) | 21 | 21 |
| (2) | 21 | 17 |
| (11) | 14 | 10 |
| (12) | 3.0 | 1.2 |
| (13) | 15 | 12 |
| (14) | 4.0 | 3.0 |
| (15) | 6.5 | 5.0 |
| (16) | 4.6 | 3.0 |
| (17) | 9.0 | 7.0 |

III. Separation Membrane with Polyamide Containing Porous Support Layer

[Production Examples (18) to (27) of Separation Membrane]

(Production of Polyamide Forming Porous Support Layer)

Amine was dissolved into dehydrated N-methyl-2-pyrrolidone so as to reach the concentration shown in the following Table 8. Further, acid halide was added to reach the concentration shown in the following Table 8, so as to achieve polymerization by stirring for 2 hours. After that, neutralization was performed with lithium carbonate. Thus, a solution of aromatic polyamide with a polymer concentration of 10 wt% was obtained.

[Table 8]

| Polymerization example | Amine (mol%) | | Acid halide (mol%) | | | Number of moles of chloro groups/ number of moles of aromatic rings (mole fraction) |
|---|---|---|---|---|---|---|
| | 2-chloro paraphenylene diamine | 4,4'-diamino diphenyl ether | Terephthaloyl chloride | Isophthaloyl chloride | 2-chloro terephthaloyl chloride | |
| a | 100 | - | 70 | 30 | - | 50% |
| b | 30 | 70 | - | - | 100 | 48% |
| c | 80 | 20 | - | - | 100 | 81% |

(Formation of Porous Support Layer)

Each polyamide in polymerization examples a to c was diluted to reach 6 wt%. A solvent shown in the following Table 9 was used. The obtained solution was cast to be 180 μm thick on polyphenylene sulfide nonwoven fabric (gas flow rate of 2.0 $cc/cm^2/sec$) serving as a substrate, immersed in pure water immediately and allowed to stand still for 5 minutes. In this manner, a support membrane including the substrate and the porous support layer formed on the substrate was obtained.

[Table 9]

| Support membrane | Porous support layer | |
|---|---|---|
| | Polymerization example | Solvent |
| i | a | NMP |
| ii | b | NMP |
| iii | c | NMP |
| iv | c | NMP, 10 wt% 2-propanol |
| v | c | NMP, 10 wt% anisole |
| vi | c | NMP, 10 wt% acetone |
| vii | c | NMP, 20 wt% acetone |

(Formation of Separation Functional Layer)

The support membrane obtained by the aforementioned operation was immersed in an aqueous solution of 6.0 wt% m-PDA for 2 minutes. Next, the support membrane was lifted up gradually in a vertical direction, and sprayed with nitrogen from an air nozzle to remove an excessive amine aqueous solution from the surface of the porous support layer. Next, a 0.16 wt% TMC solution was applied to the porous support layer so that all the surface of the porous support layer got wet with the TMC solution. The membrane was allowed to stand still for 30 seconds. Next, the membrane surface was retained vertically for 1 minute to remove an excessive solution from the surface of the porous support layer. After that, the membrane was allowed to stand still (for polycondensation) in an oven at 100°C for a time shown in the following Table 10, and then the membrane was washed with water at 50°C for 10 hours. Further, the membrane was dried in an oven at 120°C for 30 minutes. Thus, a separation membrane was obtained.

[Table 10]

| Separation membrane | Support membrane | Separation functional layer | |
|---|---|---|---|
| | | Solvent | Polymerization |
| (18) | i | Undecane | 120 sec |
| (19) | i | Decane | 60 sec |
| (20) | ii | Undecane | 120 sec |
| (21) | ii | Decane | 60 sec |
| (22) | iii | Undecane | 120 sec |
| (23) | iii | Decane | 60 sec |
| (24) | iv | Decane | 60 sec |
| (25) | v | Decane | 60 sec |
| (26) | vi | Decane | 60 sec |
| (27) | vii | Decane | 60 sec |

[Measurement of Contact Angle of Porous Support Layer with Water]

The separation membrane was immersed in an aqueous solution of sodium hypochlorite so as to remove the separation functional layer and expose the surface of the porous support layer. The support membrane was allowed to stand still in an oven at 120°C for 30 minutes so as to be dried. After that, 1.5 μL of distilled water was dropped onto the porous support layer. Based on an image obtained one second after the dropping, a static contact angle with water was calculated by image analysis in a computer according to a θ/2 method using Drop Master DM500 made by Kyowa Interface Science Co., Ltd. Results are shown in Table 11.

[Pore Size in Surface of Porous Support Layer]

The separation membrane was immersed in an aqueous solution of sodium hypochlorite so as to remove the separation functional layer and expose the surface of the porous support layer. The surface of the porous support layer was imaged by an SEM with a magnification of 2,000,000 times and a visual field size of 0.3072 $\mu m^2$. The obtained image was binarized by use of Microsoft Office 2010. Next, not pores but shadows cast due to the granular structure of the surface were removed (level 2) by use of Photo Draw. The image was corrected again into an intermediate tone 70 by use of Microsoft Office 2010 to thereby remove the shadows further.

The number of pores and the diameters of the respective pores were measured from the corrected image by Inspector 2.2. The ratio of pores having a size of 8 nm or more to the total number of pores was calculated by dividing the number of pores having a pore size of 8 nm or more by the total number of pores. The ratio of the number of pores having a pore size of 8 nm or more to the total number of pores and the largest pore size were measured for each of 5 SEM images in the same procedure as described above. A smallest value and a largest value were excluded from the 5 numerical values obtained thus, and an arithmetic mean value was calculated from the three values obtained thus. Results are shown as "maximum pore size" in Table 12.

[Table 11]

| Support membrane | Material of support layer | Contact angle (°) with water |
|---|---|---|
| Separation membrane (1) | Polysulfone | 79° |
| i | Polymerization example a | 52° |
| ii | Polymerization example b | 44° |

[Table 12]

| Separation membrane | Material of support layer | Contact angle (°) with water | Ratio (%) of pores each having a diameter of 8 nm or more | Maximum pore size (nm) |
|---|---|---|---|---|
| iii | Polymerization example c | 49° | 17% | 14 |
| iv | Polymerization example c | 49° | 18% | 16 |
| v | Polymerization example c | 49° | 11% | 13 |
| vi | Polymerization example c | 49° | 9% | 11 |
| vii | Polymerization example c | 49° | 5% | 11 |

[Hydrogen Gas Permeability and Selective Permeability]

Separation selectivity was measured in the same manner as in the aforementioned chapter II. Results are shown in Table 13.

[Table 13]

| Separation membrane | $H_2/N_2$ selectivity | $H_2/CO_2$ selectivity |
|---|---|---|
| (18) | 93 | - |
| (19) | 90 | - |
| (20) | 106 | - |
| (21) | 104 | - |
| (22) | 134 | 12 |

(continued)

| Separation membrane | $H_2/N_2$ selectivity | $H_2/CO_2$ selectivity |
|---|---|---|
| (23) | 138 | 12 |
| (24) | 105 | 11 |
| (25) | 105 | 17 |
| (26) | 112 | 19 |
| (27) | 131 | 18 |
| Only $H_2/N_2$ selectivity was measured about the production examples (18) to (21). | | |

[Long-Term Running Test]

Gas permeability of each separation membrane was measured under the following conditions in the same manner as in the aforementioned chapter I.

*Effective membrane area of separation membrane: 25 $cm^2$
*Cell temperature: 130°C
*Supplied gas: ratio of 7:3 in flow rate between hydrogen and carbon dioxide, with total flow rate of 100 $cm^3$/min, and 1 atm
* Sweep gas: argon with 100 $cm^3$/min and 1 atm

The test was performed for 90 hours, and the permeability of hydrogen and the permeability of carbon dioxide were measured 1 hour and 90 hours after the start of the test. Based on obtained values, an $H_2$ permeability ratio, that is, ($H_2$ permeability after 90 hours/$H_2$ permeability after 1 hour), and an $H_2/CO_2$ selectivity ratio (selectivity after 90 hours/selectivity after 1 hour) were calculated. Results are shown in Table 14.

[Table 14]

| Separation membrane | Continuous running performance | |
|---|---|---|
| | $H_2$ permeability ratio after 90 hours/initial | $H_2/CO_2$ selectivity ratio after 90 hours/initial |
| (1) | 0.76 | 0.92 |
| (2) | 0.79 | 0.90 |
| (18) | 0.87 | 0.99 |
| (19) | 0.85 | 0.97 |
| (20) | 0.91 | 1.01 |
| (21) | 0.92 | 1.00 |
| (22) | 0.88 | 1.04 |
| (23) | 0.88 | 1.04 |
| (24) | 0.97 | 1.25 |
| (25) | 1.05 | 0.84 |
| (26) | 1.29 | 0.97 |
| (27) | 1.23 | 0.97 |

[Power Generation Test]

The voltage drop rates using the power generation system 13 and the power generation system 14 were measured in the same manner as in the aforementioned chapter II. Results are shown in Table 15.

[Table 15]

| Separation membrane | Voltage drop rate (%) | |
|---|---|---|
| | System 13 | System 14 |
| (1) | 21 | 21 |
| (18) | 27 | 17 |
| (19) | 24 | 14 |
| (20) | 18 | 11 |
| (21) | 20 | 9.0 |
| (22) | 9.0 | 2.0 |
| (23) | 6.0 | 0.80 |
| (24) | 16 | 15 |
| (25) | 19 | 15 |
| (26) | 23 | 19 |
| (27) | 7.0 | 3.5 |

IV. Separation Membrane with Non-Polyamide Separation Functional Layer]

[Production Example 28 of Separation Membrane]

(Formation of Porous Support Layer)

A porous support layer on a substrate was formed in the same manner as in the aforementioned production example (27). Thus, a support membrane was obtained.

(Formation of Separation Functional Layer)

A layer of graphene was formed on the support membrane with reference to a method according to the specification of US Patent Application Publication No. 2015/0273403. Specific description is as follows.

The support membrane was coated with an acetone/water (volume fraction = 2:8) mixed solution (0.1 wt%, average particle size: 800 nm) of single-layer graphene oxide by spin coating with a maximum rotational frequency of 8000 rpm, a rotation frequency rise rate of 100 rpm/sec, and a rotation time of 60 sec at the maximum rotational frequency, so as to form a single-layer graphene oxide layer. The coating amount was set at 1 $mL/cm^2$ per unit area of the support membrane. In addition, a spin chamber, a spin table and the support membrane were preheated to 95°C.

The obtained membrane was heated at 160°C for 30 minutes so as to partially reduce the graphene oxide. Thus, a graphene layer was produced.

[Production Example 29 of Separation Membrane]

*Formation of Porous Support Layer

A porous support layer was formed on a substrate in the same manner as in the aforementioned production example (27). Thus, a support membrane was obtained.

*Formation of Separation Functional Layer

A layer of ZIF-8 was formed on the support membrane with reference to a method (Example 4) according to JP 2019-118859 A. Specific description is as follows.

$Zn(NO_3)_2 \cdot 6H_2O$ and 2-methyl imidazole were dissolved into methanol so that the weight ratio reached 1:6 and the total concentration of $Zn(NO_3)_2 \cdot 6H_2O$ and 2-methyl imidazole reached 15 wt%. Precipitate was recovered by filtration, washed and then dried. ZIF-8 obtained thus was added to methanol so as to have a concentration of 0.1 wt% so as to produce a suspension. The aforementioned support membrane was immersed in the suspension for 10 minutes, then

lifted up and dried.

After that, the obtained membrane was dissolved into 1000 mL of ion-exchanged water so that the weight ratio between $Zn(NO_3)_2 \cdot 6H_2O$ and 2-methyl imidazole reached 1:20 and the total concentration of $Zn(NO_3)_2 \cdot 6H_2O$ and 2-methyl imidazole reached 10 wt%. In the solution obtained thus, the support membrane subjected to the aforementioned treatment was dipped at 25°C for 24 hours, and then washed with ion-exchanged water.

[Production Example 30 of Separation Membrane]

A polyimide membrane was produced with reference to a method (Example 1) according to Japanese Patent No. 6142730.

A monomer mixture (DSDA:6FDA:s-BPDA:TSN:DABA=3:4:3:6:4 (mole ratio)) was dissolved into parachlorophenol so that the concentration reached 18 wt%. While the solution was stirred under a nitrogen gas atmosphere, polymerization reaction was performed at a reaction temperature of 210°C for 30 hours. Thus, a polyimide solution was prepared. The obtained polyimide solution is filtrated. Using a spinning apparatus provided with a spinning nozzle (an outer diameter of 900 $\mu$m in a circular opening portion, a slit width of 200 $\mu$m in the circular opening portion, and an outer diameter of 450 $\mu$m in a core opening portion), the solution was ejected in a hollow yarn shape to a primary coagulating solution (3°C, 90 wt% isopropanol aqueous solution), and further immersed in a secondary coagulating solution (1°C, 90 wt% isopropanol aqueous solution) so as to be coagulated.

The obtained hollow yarn was washed with isopropanol, replaced by isooctane, and heated at 130°C to be dried. Further heating treatment at 380°C for 20 minutes was performed on the hollow yarn. Thus, a hollow yarn membrane was obtained.

The abbreviations of compounds are described below.

DSDA: 3,3',4,4'-diphenylsulfonetetracarboxylic dianhydride
6FDA: 4,4'-(hexafluoroisopropylidene)-bis(phthalic anhydride)
s-BPDA: 3,3',4,4'-biphenyltetracarboxylic dianhydride
TSN: mixture containing 3,7-diamino-2,8-dimethyldibenzothiophene=5,5-dioxide as major component, and containing isomers each having a methyl group in a different position, that is, 3,7-diamino-2,6-dimethyldibenzothiophene=5,5-dioxide, and
3,7-diamino-4,6-dimethyldibenzothiophene=5, 5-dioxide
DABA: 3,5-diaminobenzoic acid

[Production Example 31 of Separation Membrane]

A zeolite membrane was produced with reference to a method (Example 1) according to Japanese Patent No. 6107000. Specific description is as follows.

NaOH, KOH, and aluminum hydroxide (containing 53.5 wt% of $Al_2O_3$, made by Aldrich) were added to ion-exchanged water so as to dissolve the aluminum hydroxide therein. After that, an aqueous solution of N,N,N-trimethyl-1-adamantan ammonium hydroxide (TMADAOH) was added, and colloidal silica (SNOWTEX-40, made by Nissan Chemical Corporation) was further added and stirred into a mixture. The TMADAOH aqueous solution was a solution with a concentration of 25 wt%, made by Sachem Inc. The mole ratio among components was set at $SiO_2/Al_2O_3/NaOH/KOH/H_2O/TMADAOH=1/0.07/0.12/0.1/100/0.05$.

The mixture was hydrothermally synthesized at 170°C for 50 hours. Thus, zeolite having a particle size of 0.5 $\mu$m was obtained. The zeolite was dispersed at a concentration of 0.4 wt% into distilled water to obtain a suspension. A porous alumina tube (outer diameter of 12 mm and inner diameter of 9 mm) which was an inorganic porous support was immersed in the suspension for a predetermined time. After that, the porous alumina tube was dried at 120°C for 24 hours.

The porous alumina tube subjected to the treatment was immersed in the aforementioned mixture put into an inner cylinder (800 ml) made of Teflon (registered trademark), and heated at 180°C for 48 hours. After that, the porous alumina tube was dried at 100°C for 8 hours. A composite of alumina and zeolite obtained thus was fired in an electric furnace at 500°C for 10 hours.

[Production Example 32 of Separation Membrane]

A palladium membrane was produced with reference to a method (Example 1) according to WO 2014/098038.

An ingot consisting of 65 mol% of Pd and 35 mol% of Ag was put into an arc melting furnace provided with a water-cooled copper crucible, and arc-melted at atmospheric pressure and in an Ar gas atmosphere. The melt was cold-rolled to be 6 mm thick by use of a two-stage rolling mill having a roll diameter of 100 mm, so as to obtain a sheet

material. The obtained sheet material was rolled and put into a glass tube, and then the glass tube was sealed off at opposite ends. Pressure inside the glass tube was reduced at room temperature down to $4.8\times10^{-4}$ Pa. After that, the temperature inside the glass tube was increased to 7690°C, and allowed to stand still for 24 hours. After that, the glass tube was cooled down to the room temperature. Next, the sheet material was cold-rolled to be 100 μm thick by use of a two-stage rolling mill having a roll diameter of 100 mm, and further cold-rolled to be 25 μm thick by use of a two-stage rolling mill having a roll diameter of 20 mm. After that, the rolled sheet material was put into a glass tube, and the glass tube was sealed off at opposite ends. Pressure inside the glass tube was reduced at the room temperature down to $4.9\times10^{-4}$ Pa. After that, the temperature inside the glass tube was increased to 710°C, and allowed to stand still for 3 hours. After that, the glass tube was cooled down to the room temperature. Thus, a palladium membrane was produced.

[Selective Permeability]

The selective permeability of each separation membrane was measured in the same method as in the aforementioned chapter I, except that nitrogen was used instead of carbon dioxide. Results are shown in Table 16.

[Table 16]

| Separation membrane | Separation functional layer | $H_2/N_2$ selectivity |
|---|---|---|
| (28) | Graphene | 200 |
| (29) | MOF (ZIF-8) | 180 |
| (30) | Polyimide | 10 |
| (31) | Zeolite | 3 (Moisture adsorbed to lower hydrogen permeability extremely) |
| (32) | Palladium | -(Membrane broken to make measurement impossible) |

[Power Generation Test]

Using the power generation system 14 shown in FIG. 7, the voltage drop rate was measured in the same manner as in the aforementioned chapter II. Results are shown in Table 17.

[Table 17]

| Separation membrane | Voltage drop rate (%) |
|---|---|
| (28) | 2 |
| (29) | 3 |
| (30) | 40 |
| (31) | >50 |
| (32) | >50 |

[Measurement of Amount of Used Hydrogen]

Power generation was performed under the aforementioned conditions 1 by the power generation system 102 shown in FIG. 8. An amount M1 (L: liter) of pure hydrogen gas from the negative electrode tank was measured.

In addition, the power generation system 14 shown in FIG. 7 was operated on the same conditions for the same time, and an amount M2 of used pure hydrogen gas was measured.

(M1-M2)/M1 measured in each separation membrane shown in Table 18 is shown as a used hydrogen gas amount reduction rate.

[Table 18]

| Separation membrane | Used hydrogen gas amount reduction rate (-) |
|---|---|
| - | 1.0 |

(continued)

| Separation membrane | Used hydrogen gas amount reduction rate (-) |
|---|---|
| (6) | 0.40 |
| (14) | 0.45 |
| (19) | 0.52 |
| (25) | 0.55 |
| (28) | 0.65 |
| (29) | 0.62 |
| (30) | 0.20 |
| (31) | 0.10 |

[Operation Stability]

Power generation was performed under the aforementioned conditions 1 by the power generation system 102 shown in FIG. 8. Permeated gas was collected from the separator twice, that is, immediately after the start of the power generation and after a predetermined time had passed since the start of the power generation. Then, hydrogen purity was measured. From the hydrogen purity immediately after the start of the power generation and the hydrogen purity after the predetermined time had passed, a hydrogen purity drop rate was calculated. This operation was performed in the separation membrane shown in Table 19 while the supply-side and permeation-side flow channel materials were changed as shown in Table 19. All the flow channel materials were nets. In addition, for the separation membrane in the production example (25), an element having a membrane area of 3 $m^2$, which was three times as large, was also produced.

Incidentally, since the separation membrane in the production example (30) was a hollow yarn membrane, an element was produced in such a manner that the membrane was fixed into a housing in a state where one end of the membrane was closed, and the other end was opened. Gas was supplied into the housing through the end portion where the hollow yarn membrane was closed, and permeated gas was obtained from the inside of the hollow yarn membrane.

[Table 19]

| Separation membrane | Flow channel material thickness (μm) | Flow channel material average pore size (mm) | Hydrogen purity drop rate (%) | Note |
|---|---|---|---|---|
| (6) | 120 | 0.80 | 28 | |
| (14) | 40 | 0.80 | 25 | |
| (14) | 120 | 0.08 | 10 | |
| (14) | 40 | 0.08 | 5 | |
| (19) | 120 | 0.80 | 20 | |
| (25) | 40 | 0.80 | 15 | |
| (25) | 120 | 0.08 | 8 | |
| (25) | 40 | 0.08 | 5 | |
| (28) | 120 | 0.80 | 18 | |
| (29) | 120 | 0.80 | 16 | |
| (25) | 40 | 0.08 | 3 | Membrane area 3 $m^2$ |
| (30) | - | - | >50 | Yarn broken |
| (30) | - | - | - | Membrane area 3 $m^2$ water coagulated in circulating pipe arrangement to suspend operation |

[Summary]

As shown above, in the case where hydrogen gas was reproduced by the separation membrane having selective permeability for hydrogen, the power generation efficiency of the fuel cell was improved. In addition, the amount of used hydrogen could be reduced.

Each of the separation membranes (1) to (4), which included a separation functional layer containing crosslinked polyamide, exhibited hydrogen permeability and $H_2/CO_2$ selectivity. Each of the separation membranes (5) to (8), which satisfied (A+B)/C≤0.66, exhibited high $H_2/CO_2$ selectivity of 10 or more. In addition, each of the separation membranes (1) and (2) exhibited $H_2/N_2$ selectivity of 10 to 20.

In each of the separation membranes (11) to (17), fluorine was introduced onto an aromatic ring after crosslinked polyamide had been formed or, alternatively, acid chloride in which fluorine had been introduced into an aromatic ring was added during reaction of interfacial polymerization so as to introduce fluorine into crosslinked polyamide. As a result, the $H_2/CO_2$ selectivity and the $H_2/N_2$ selectivity were improved in comparison with those of (1) and (2). Further, the membrane in which the number of fluorine atoms/the number of carbon atoms was 0.001 to 0.080 had a small change in performance even after a pressure of 1 MPa had been applied.

Particularly in the case where a porous support layer containing polyamide containing a chloro group was used, good selectivity was obtained, and reduction in permeability or selectivity during continuous running was inhibited. Further, in the case where the number of pores having a pore size of 8 nm or more was 15% or higher of the total number of pores in the surface of the porous support layer, selectivity was improved. Further, in the case where the maximum pore size was 12 nm or less, selectivity was improved.

In addition, as shown in Table 19, in the membranes other than that of the production example (30), reduction in hydrogen purity in permeated gas before and after power generation was suppressed, and high operation stability was obtained. In addition, in the production example (30), yarn was broken in the case where the membrane area was small. However, in the case where the membrane area was increased, dew condensation occurred on the downstream side of the separator due to coagulation of water. Thus, operation had to be suspended. A polyimide membrane has high water vapor permeability. Accordingly, it is estimated that when the membrane area was increased, moisture contained in permeated gas became excessive enough to cause coagulation of water and dew condensation. On the other hand, in the membrane in the production example (25), such a problem did not occur even if the membrane area was increased.

In comparison between the separation membranes in the production examples (6) and (19), it is proved that higher operation stability is exhibited in the case where a support membrane raw material of a separation membrane has higher heat resistance.

A flow channel material was changed using the separation membrane in each of the production example (14) and the production example (25). As a result, higher operation stability was obtained in the case where the flow channel material was thin such that structural destroy caused by bending during winding or cracking caused by vibration during power generation running could be relieved or in the case where the pore size of the flow channel material was reduced such that occurrence of defects caused by sinking of the membrane could be reduced.

In each of the production examples (28) and (29), a non-polyamide separation functional layer was used, and high operation stability was obtained. It is estimated that this is because the physical strength of the separation functional layer itself is excellent.

The present invention has been described in detail along its specific embodiments. However, it is obvious for those in the art that various changes and deformations can be made on the present invention without departing from the spirit and scope of the present invention. Incidentally, the present application is based on Japanese Patent Application No. 2018-231444 filed on December 11, 2018, the contents of which are entirely incorporated by reference.

REFERENCE SIGNS LIST

| | |
|---|---|
| 4 | fuel cell |
| 5 | separator |
| 6 | hydrogen storage tank |
| 11,12,13,14,101,102 | power generation system |
| 21 | negative electrode gas supply pipe arrangement |
| 22 | mixed gas pipe arrangement |
| 23,24,25 | return pipe arrangement |
| 28 | negative electrode exhaust gas pipe arrangement |
| 29 | non-permeated gas pipe arrangement |

| | |
|---|---|
| 31 | positive electrode gas supply pipe arrangement |
| 32 | positive electrode exhaust gas pipe arrangement |
| 33 | positive electrode exhaust gas return pipe arrangement |
| 50 | spiral-type element |
| 51 | center tube |
| 52 | separation membrane |
| 53 | supply-side flow channel material |
| 54 | permeation-side flow channel material |
| 55 | first end plate |
| 56 | second end plate |
| 73 | separation functional layer |
| 74 | porous support layer |
| 75 | substrate |
| 80 | testing cell |
| 81,83 | gas tank |
| 82,84 | mass flow controller |
| 85 | valve |
| 86 | gas chromatograph |
| 87 | soap film flowmeter |

## Claims

**1.** A power generation system, comprising:

a fuel cell that includes a negative electrode supplied with hydrogen-containing gas and a positive electrode supplied with oxygen-containing gas, and is configured to generate electric power by chemical reaction between hydrogen and oxygen;
a separator that includes a hydrogen-permselective separation membrane and is configured to obtain permeated gas and non-permeated gas from mixed gas; and
a circulating passage through which negative electrode-side exhaust gas of the fuel cell is sent to the separator, and through which the permeated gas is supplied to the negative electrode, wherein:

the separation membrane includes a porous support layer and a separation functional layer provided on the porous support layer; and
the separation functional layer contains at least one kind of chemical compound selected from the group consisting of polyamide, graphene, MOF (Metal Organic Framework), and COF (Covalent Organic Framework).

**2.** The power generation system according to claim 1, further comprising:
a pipe arrangement that is connected to the circulating passage at a portion located in a downstream of the fuel cell and an upstream of the separator so that positive electrode-side exhaust gas can join negative electrode-side exhaust gas.

**3.** The power generation system according to claim 1 or 2, further comprising:

a hydrogen storage tank; and
a negative electrode gas supply pipe arrangement establishing connection between the hydrogen storage tank and the fuel cell,
wherein the hydrogen storage tank is configured to be supplied with hydrogen-containing gas from outside of the power generation system.

**4.** The power generation system according to claim 3, wherein the circulating passage is configured to send the permeated gas to the negative electrode gas supply pipe arrangement or the hydrogen storage tank.

**5.** The power generation system according to any one of claims 1 to 4, wherein the separation functional layer contains crosslinked polyamide that is a polycondensate of polyfunctional amine with polyfunctional acid halide.

6. The power generation system according to claim 5, wherein a number A of amino groups, a number B of carboxyl groups and a number C of amide groups in the crosslinked polyamide satisfy the following relationship:

$$(A+B)/C \leq 0.66.$$

7. The power generation system according to claim 5 or 6, wherein the crosslinked polyamide is fully aromatic polyamide.

8. The power generation system according to any one of claims 5 to 7, wherein the crosslinked polyamide contains a nitro group.

9. The power generation system according to any one of claims 5 to 8, wherein the crosslinked polyamide contains a fluorine atom.

10. The power generation system according to claim 9, wherein the number of fluorine atoms to the number of carbon atoms determined by X-ray photoelectron spectroscopy (XPS) is within a range of 0.1% to 12% in the separation functional layer.

11. The power generation system according to any one of claims 5 to 10, wherein the porous support layer contains, as the crosslinked polyamide, aromatic polyamide containing an aromatic ring having a chloro group as a substituent.

12. The power generation system according to claim 11, wherein the crosslinked polyamide is fully aromatic polyamide that has a structure expressed by at least one of the following formulae (1) and (2):

[Chem. 1]

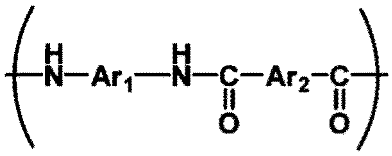

(1)

[Chem. 2]

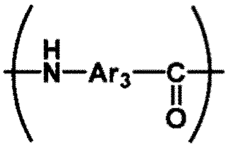

(2)

(in which each of $Ar_1$, $Ar_2$ and $Ar_3$ is at least one group selected from the group consisting of groups expressed by the following formulae (3-1) to (3-5) and formula (4); in addition, each of X, Y and Z is at least one group selected from the group consisting of -O-, $-CH_2-$, -CO-, $-CO_2-$, -S-, $-SO_2-$, and $-C(CH_3)_2-$)

[Chem. 3]

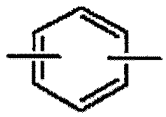
(3 − 1)

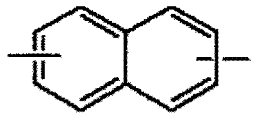
(3 − 2)

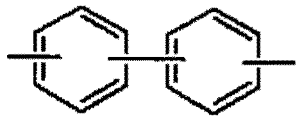
(3 − 3)

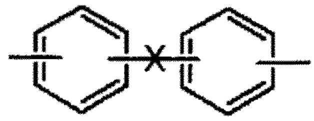
(3 − 4)

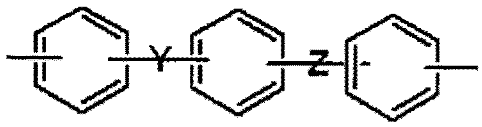
(3 − 5)

[Chem. 4]

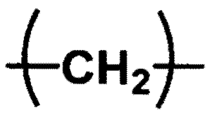
(4)

**13.** The power generation system according to claim 12, wherein each of $Ar_1$, $Ar_2$ and $Ar_3$ is at least one group selected from the group consisting of groups expressed by the formulae (3-1) to (3-5), and a substituent is disposed in a para-position.

**14.** The power generation system according to any one of claims 11 to 13, wherein the number of pores having a pore size of 8 nm or more is 15% or lower of a total number of pores in a surface of the porous support layer.

**15.** The power generation system according to any one of claims 11 to 14, wherein a maximum pore size in a surface of the porous support layer is 12 nm or less.

**16.** The power generation system according to any one of claims 1 to 15, wherein the separator includes:

a center tube configured to collect the permeated gas;
a plurality of the separation membranes wound spirally around the center tube; and
a supply-side flow channel material and a permeation-side flow channel material that are disposed among the separation membranes.

**17.** The power generation system according to claim 16, wherein the supply-side flow channel material has an average hole diameter of 0.1 mm or less.

**18.** The power generation system according to claim 16 or 17, wherein the permeation-side flow channel material has an average hole diameter of 0.1 mm or less.

**19.** The power generation system according to any one of claims 16 to 18, wherein the supply-side flow channel material has a thickness of 50 μm or less.

**20.** The power generation system according to any one of claims 16 to 19, wherein the permeation-side flow channel material has a thickness of 50 μm or less.

**21.** The power generation system according to any one of claims 16 to 20, wherein the fuel cell includes at least one cell stack having a maximum output density per volume of 1 kW/L or more and a volume of 70 L or less, and a volume of a separation membrane element per cell stack is 50 L or less.

**22.** The power generation system according to any one of claims 16 to 20, wherein the fuel cell includes at least one cell stack having a maximum output density per volume of 3 kW/L or more and a volume of 40 L or less, and a volume of a separation membrane element per cell stack is 25 L or less.

**23.** The power generation system according to any one of claims 16 to 20, wherein the fuel cell includes at least one cell stack having a maximum output density per volume of 3 kW/L or more, and a volume of 40 L or less, and a volume of a separation membrane element per cell stack is 5 L or less.

**24.** The power generation system according to claim 23, wherein:

one or more of the cell stacks, and one or more of the separation membrane elements are provided;
a sum of an average value of volumes of the cell stacks and an average value of volumes of the separation membrane elements is 40 L or less; and
a sum of an average value of weights of the cell stacks and an average value of weights of the separation membrane elements is 60 kg or less.

FIG. 1

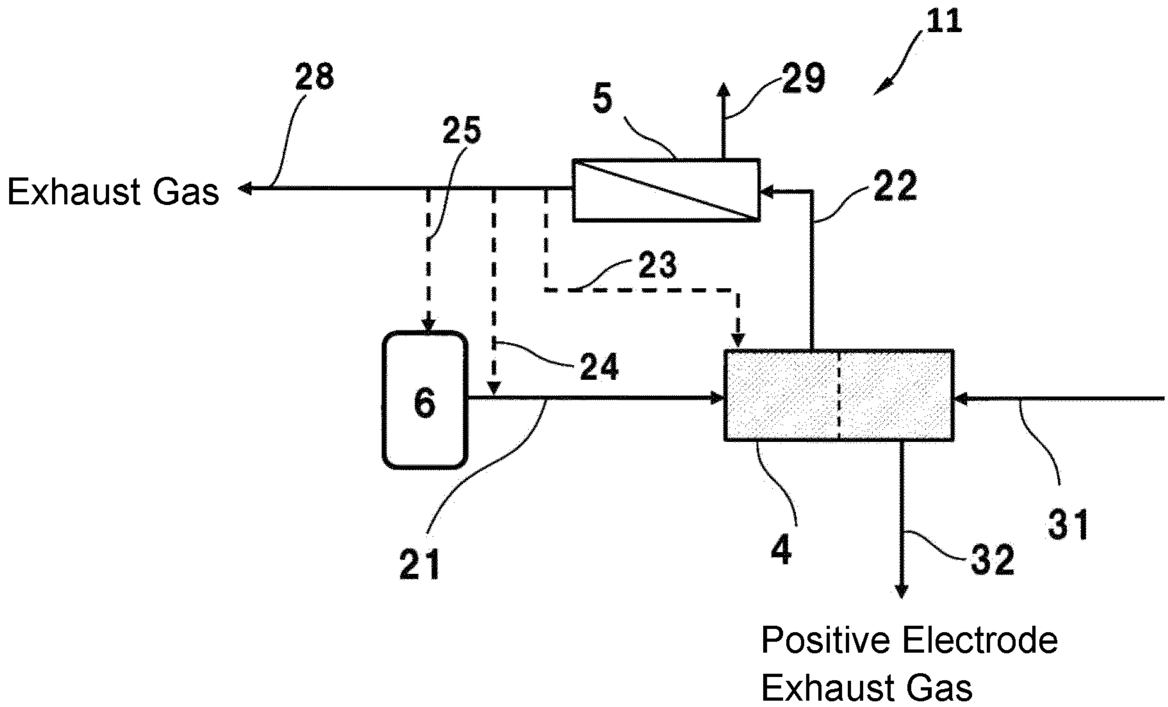
11
28
5
29
25
Exhaust Gas
22
23
24
6
21
4
32
31
Positive Electrode
Exhaust Gas

FIG. 2

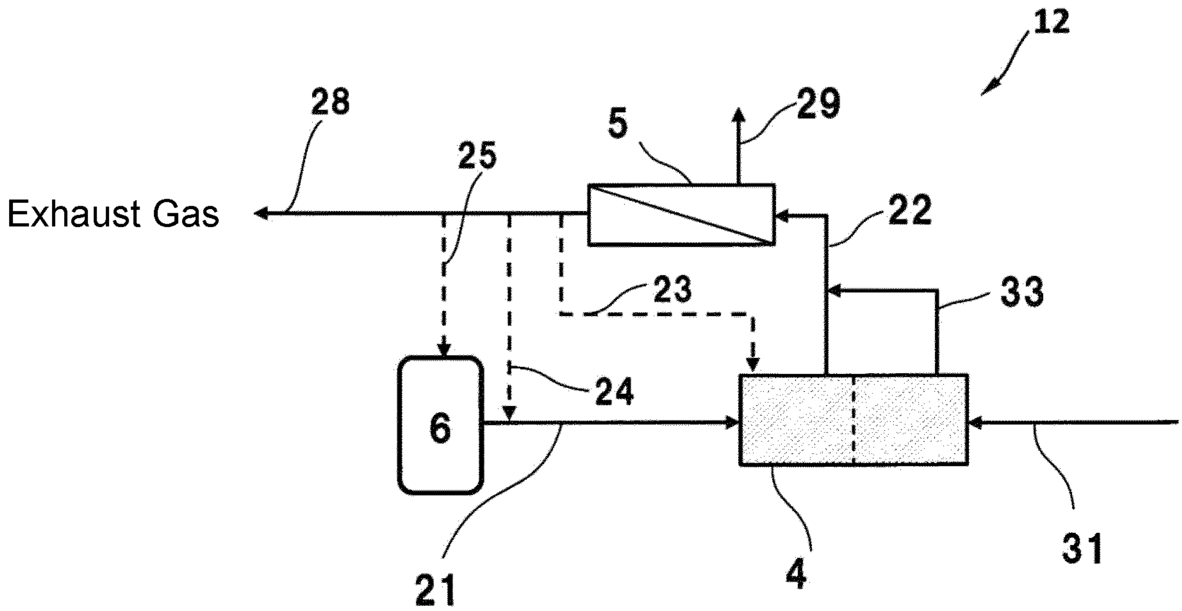
12
28
5
29
25
Exhaust Gas
22
33
23
24
6
21
4
31

FIG. 3

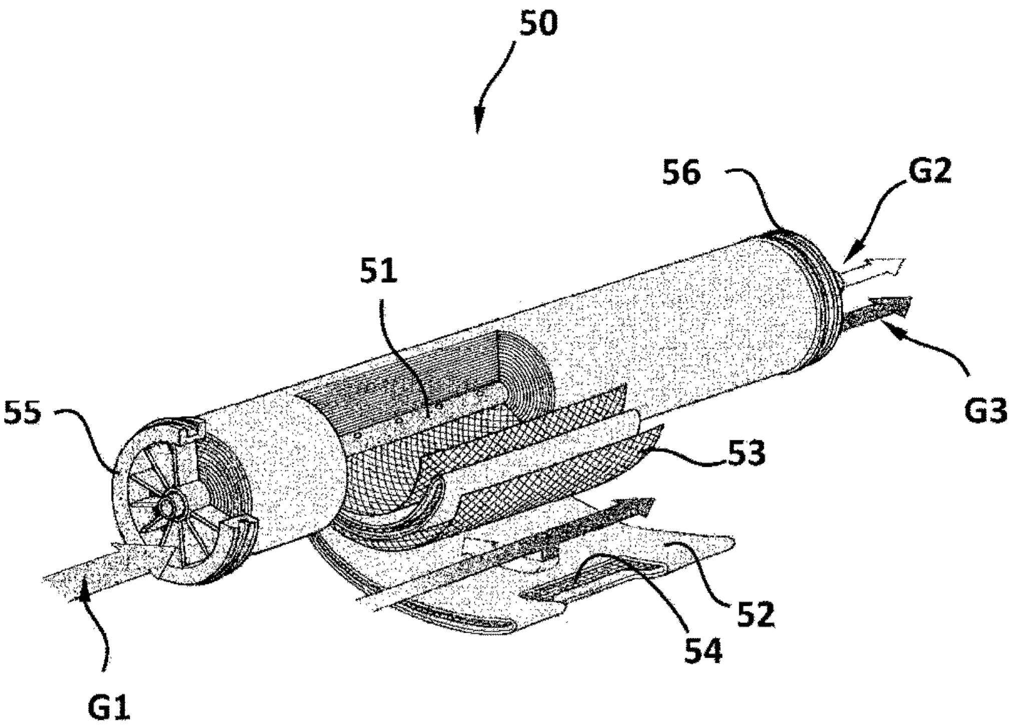


FIG. 4

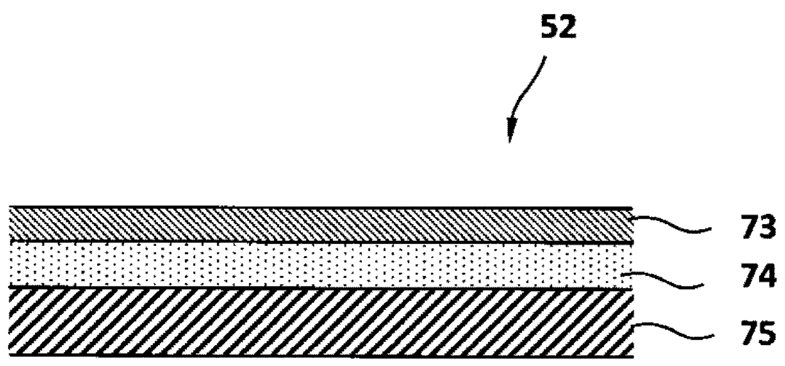

FIG. 5

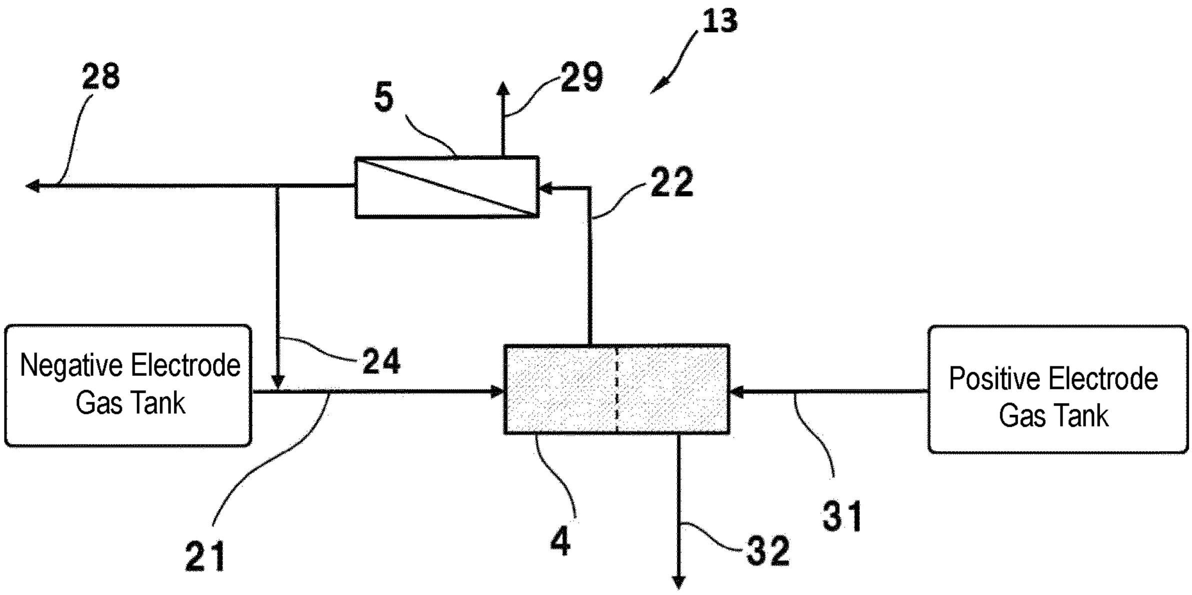
13
28
5
29
22
Negative Electrode Gas Tank
24
Positive Electrode Gas Tank
21
4
32
31

FIG. 6

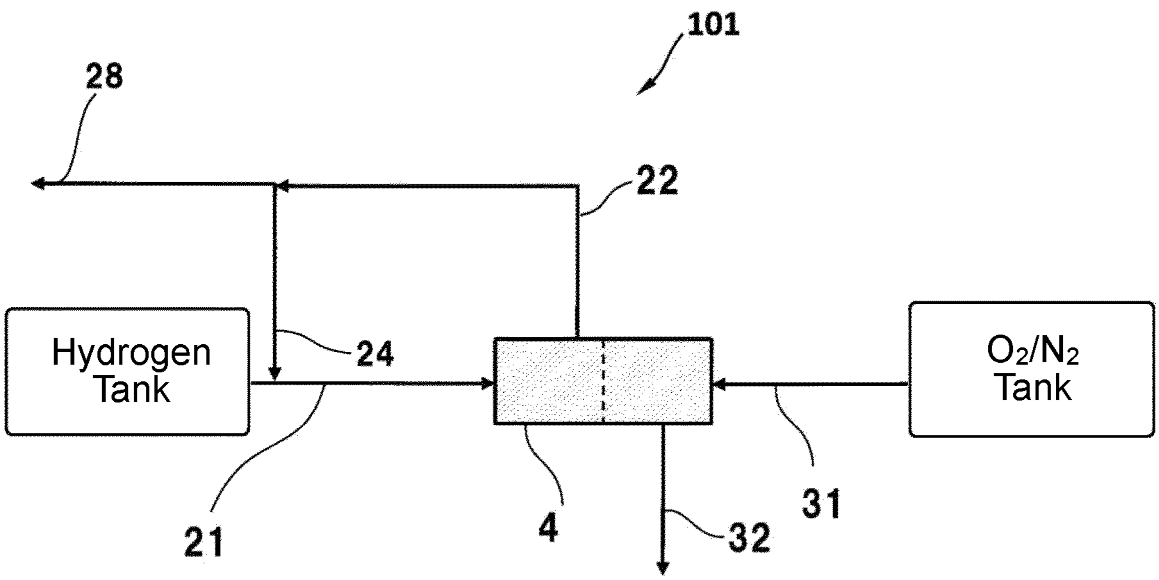
101
28
22
Hydrogen Tank
24
O2/N2 Tank
21
4
32
31

FIG. 7

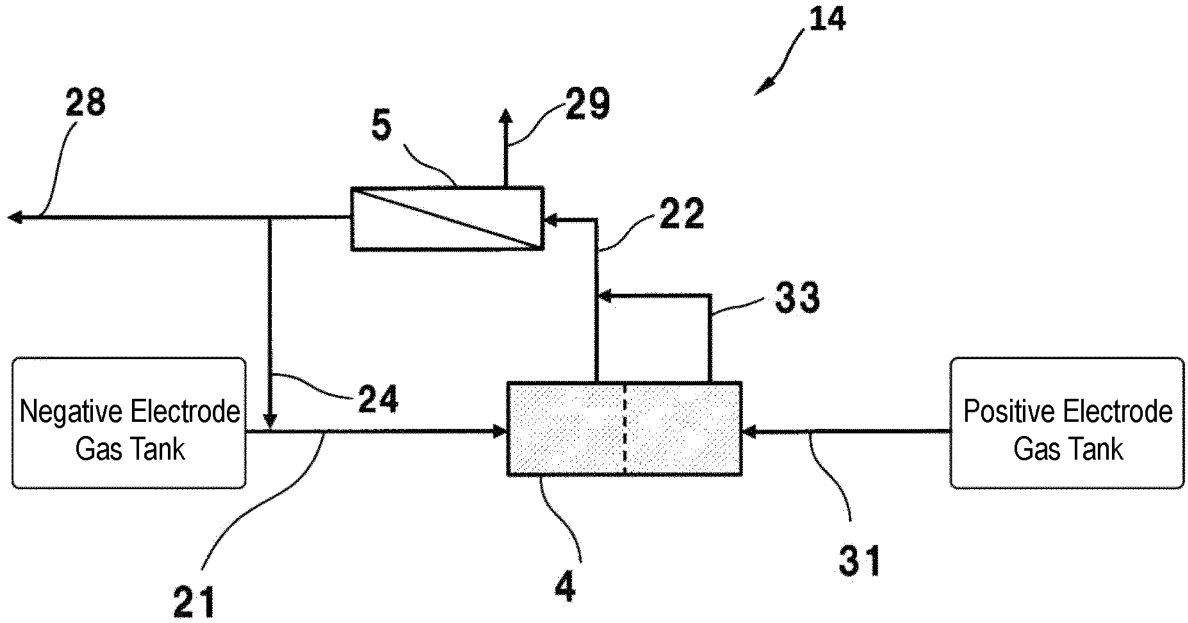
14
28
5
29
22
33
Negative Electrode Gas Tank
24
Positive Electrode Gas Tank
21
4
31

FIG. 8

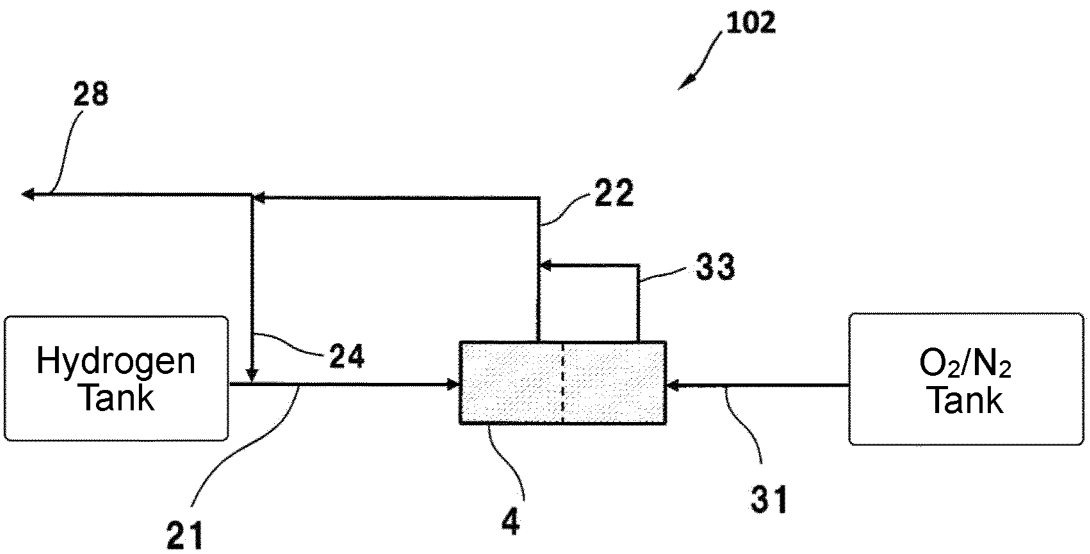
102
28
22
33
Hydrogen Tank
24
O2/N2 Tank
21
4
31

FIG. 9

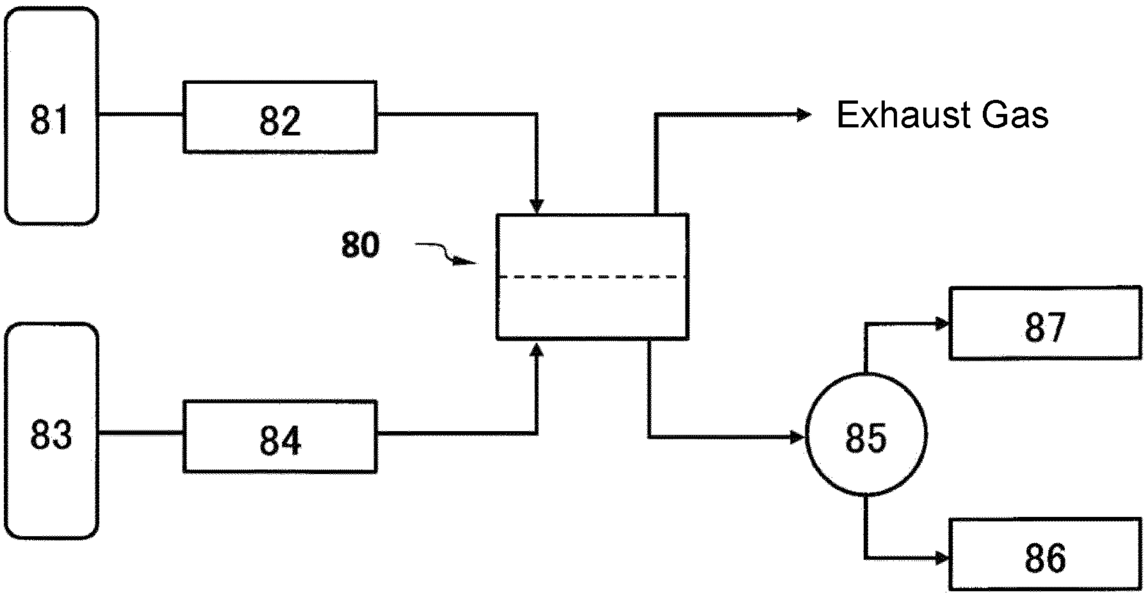

## INTERNATIONAL SEARCH REPORT

International application No. PCT/JP2019/048577

**A. CLASSIFICATION OF SUBJECT MATTER**

B01D 63/10(2006.01)i; B01D 69/10(2006.01)i; B01D 69/12(2006.01)i; B01D 71/56(2006.01)i; C01B 3/00(2006.01)i; C01B 3/56(2006.01)i; B01D 53/22(2006.01)i; H01M 8/04(2016.01)i; H01M 8/04791(2016.01)i; H01M 8/0662(2016.01)i; H01M 8/10(2016.01)n; H01M 8/12(2016.01)n

FI: H01M8/0662; H01M8/04 N; H01M8/04791; H01M8/04 J; C01B3/56; C01B3/00 A; B01D71/56; B01D63/10; B01D69/10; B01D69/12; B01D53/22; H01M8/10 101; H01M8/12 101

According to International Patent Classification (IPC) or to both national classification and IPC

**B. FIELDS SEARCHED**

Minimum documentation searched (classification system followed by classification symbols)

B01D63/10; B01D69/10; B01D69/12; B01D71/56; C01B3/00; C01B3/56; B01D53/22; H01M8/04; H01M8/04791; H01M8/0662; H01M8/10; H01M8/12

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2018-162184 A (MITSUBISHI HEAVY INDUSTRIES, LTD.) 18.10.2018 (2018-10-18) paragraphs [0002]-[0003], [0023], [0039], [0040] | 1-24 |
| Y | JP 2009-295377 A (TOYOTA BOSHOKU CORPORATION) 17.12.2009 (2009-12-17) fig. 3 | 1-24 |
| Y | WO 2012/105397 A1 (TORAY INDUSTRIES, INC.) 09.08.2012 (2012-08-09) paragraphs [0020]-[0021], [0141]-[0142] | 1-24 |
| Y | WO 2018/079729 A1 (TORAY INDUSTRIES, INC.) 03.05.2018 (2018-05-03) paragraphs [0024], [0035]-[0036], [0043] | 6-8 |

☒ Further documents are listed in the continuation of Box C. ☒ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 04 March 2020 (04.03.2020) | 17 March 2020 (17.03.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/048577

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2018/22I684 A1 (TORAY INDUSTRIES, INC.) 06.12.2018 (2018-12-06) paragraphs [0008], [0040] | 9-10 |
| Y | JP 2016-29183 A (SUMITOMO CHEMICAL CO., LTD.) 03.03.2016 (2016-03-03) paragraph [0040] | 11-15 |

Form PCT/ISA/210 (continuation of second sheet) (January 2015)

**INTERNATIONAL SEARCH REPORT**
Information on patent family members

International application No.
PCT/JP2019/048577

| Patent Documents referred in the Report | Publication Date | Patent Family | Publication Date |
|---|---|---|---|
| JP 2018-162184 A | 18 Oct. 2018 | (Family: none) | |
| JP 2009-295377 A | 17 Dec. 2009 | (Family: none) | |
| WO 2012/105397 A1 | 09 Aug. 2012 | US 2013/0284664 A1 paragraphs [0030]-[0032], [0164]-[0165]<br>EP 2671628 A1<br>CN 103338846 A<br>KR 10-2014-0005936 A | |
| WO 2018/079729 A1 | 03 May 2018 | US 2019/0275461 A1 paragraphs [0033], [0046]-[0047], [0054]<br>EP 3533516 A1<br>CA 3041848 A1<br>CN 109906113 A<br>KR 10-2019-0069449 A | |
| WO 2018/221684 A1 | 06 Dec. 2018 | (Family: none) | |
| JP 2016-29183 A | 03 Mar. 2016 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004006948 A
- JP 2007042607 A
- JP 2009295377 A
- US 20150273403
- JP 2019118859 A
- JP 6142730 B
- JP 6107000 B
- WO 2014098038 A
- JP 2018231444 A